(19) **Europäisches Patentamt**
**European Patent Office**
**Office européen des brevets**

(11) **EP 1 702 340 B1**

(12) **FASCICULE DE BREVET EUROPEEN**

(45) Date de publication et mention
de la délivrance du brevet:
**24.07.2013 Bulletin 2013/30**

(21) Numéro de dépôt: **04805436.5**

(22) Date de dépôt: **10.11.2004**

(51) Int Cl.:
***G21C 17/06*** *(2006.01)*

(86) Numéro de dépôt international:
**PCT/FR2004/002895**

(87) Numéro de publication internationale:
**WO 2005/062313 (07.07.2005 Gazette 2005/27)**

(54) **PROCEDE DE CONTROLE NON DESTRUCTIF D'UN ELEMENT POUR REACTEUR NUCLEAIRE**

ZERSTÖRUNGSFREIES VERFAHREN ZUR KONTROLLE EINES KERNREAKTORELEMENTS

NON-DESTRUCTIVE METHOD FOR CONTROLLING A NUCLEAR REACTOR ELEMENT

(84) Etats contractants désignés:
**ES FR GB SE**

(30) Priorité: **24.11.2003 FR 0313754**

(43) Date de publication de la demande:
**20.09.2006 Bulletin 2006/38**

(73) Titulaire: **Société Franco-Belge de Fabrication de Combustibles - FBFC**
**92400 Courbevoie (FR)**

(72) Inventeur: **MAHE, Philippe**
**F-26750 Montmirail (FR)**

(74) Mandataire: **Domenego, Bertrand**
**Cabinet Lavoix**
**2, place d'Estienne d'Orves**
**75441 Paris Cedex 09 (FR)**

(56) Documents cités:
| | |
|---|---|
| EP-A- 0 597 639 | WO-A-97/16921 |
| DE-A- 3 809 221 | US-A- 5 182 775 |
| US-A- 5 999 636 | US-A- 6 154 561 |
| US-A1- 2001 055 415 | |

• PATENT ABSTRACTS OF JAPAN vol. 2000, no. 12, 3 janvier 2001 (2001-01-03) & JP 2000 249785 A (MITSUBISHI HEAVY IND LTD; MITSUBISHI NUCLEAR FUEL CO LTD), 14 septembre 2000 (2000-09-14)
• AOKI K. ET AL: "Application of artificial neural network to discrimination of defect type in automatic radiographic testing of welds", ISIJ INTERNATIONAL, vol. 39, no. 10, 1999, pages 1081-1087, JAPAN
• WANG G. ET AL: "Automatic identification of different types of welding defects in radiographic images", NDT&E INTERNATIONAL, vol. 35, no. 8, 1 December 2002 (2002-12-01), pages 519-528, XP004395857,
• KAZANTSEV I.G. ET AL: "Statistical detection of defects in radiographic images in nondestructive testing", SIGNAL PROCESSSING, vol. 82, no. 5, 1 May 2002 (2002-05-01), pages 791-801, XP004354266, Amsterdam
• FAIVRE M.: "DETECTION ET QUANTIFICATION DE DEFAUTS DANS LES CORDONS DE SOUDURE PAR TRAITEMENT D'IMAGES RADIOSCOPIQUES", REVUE GENERALE DE L'ELECTRICITE, no. 8, 1 September 1988 (1988-09-01), pages 15-18, XP000049972, Paris

**EP 1 702 340 B1**

**Description**

L'invention concerne un procédé de contrôle non-destructif d'un élément pour réacteur nucléaire.

L'invention s'applique en particulier au contrôle de crayons d'assemblages de combustible nucléaire utilisés dans les réacteurs à eau sous pression.

Généralement, un tel crayon comprend une gaine tubulaire qui contient des pastilles de combustible nucléaire et qui est fermée à ses extrémités par un bouchon inférieur et un bouchon supérieur. Ces bouchons sont soudés à la gaine par des cordons circulaires assurant l'étanchéité entre la gaine et les bouchons.

En outre, le bouchon supérieur comprend un canal de remplissage de la gaine par un gaz inerte sous pression, par exemple de l'hélium. A l'issue de la fabrication du crayon de combustible, ce canal est fermé de manière étanche par un point de soudure.

Les cordons de soudure circulaires peuvent présenter plusieurs types de défauts.

Ainsi, des porosités peuvent y être présentes. Il s'agit en fait de vides dans le cordon de soudure.

Les cordons de soudure peuvent également présenter des sous-pénétrations, c'est à dire des parties où l'étendue radiale des cordons est plus faible que celle souhaitée.

Dans le cas de l'utilisation d'un procédé de soudage TIG (Tungsten Inert Gaz), les cordons de soudure peuvent également présenter des inclusions de tungstène.

Ce dernier type de défaut peut également être observé dans le point de soudure obturant le canal de remplissage.

En outre, il peut arriver que ce point de soudure possède une position et des dimensions telles qu'il n'obture pas de manière satisfaisante le canal de remplissage.

Les sous-pénétrations dans le cordon de soudure et le mauvais positionnement du point de soudure sont susceptibles d'engendrer une perte d'étanchéité dans le crayon de combustible et donc la libération de particules ou de gaz radioactifs dans le circuit primaire du réacteur nucléaire. Les porosités et les inclusions détériorent quant à elles la tenue mécanique du crayon.

Ces défauts doivent donc être évités et c'est pour cela que l'on met en oeuvre des procédés de contrôle non-destructif des crayons de combustible fabriqués.

Pour contrôler la qualité des cordons de soudure et des points de soudure d'étanchéité, on acquiert une image radiographique numérique des zones correspondantes d'un crayon à contrôler.

Ensuite, on compare l'image acquise avec une image de référence stockée. Cette image de référence a été obtenue à partir d'un crayon de combustible réputé ne présenter aucun défaut. On soustrait donc l'image de référence à l'image acquise, puis on traite numériquement l'image en résultant afin de faire apparaître plus nettement les éventuels défauts, et on affecte une note globale pour le cordon de soudure, une note pour le point de soudure d'étanchéité et une note pour les inclusions de tungstène. Au-delà de valeurs seuils, le crayon est considéré comme non-conforme.

Du fait des incertitudes de positionnement des crayons et des tolérances de fabrication, la position d'un crayon et ses dimensions sur l'image acquise sont différentes de celles du crayon de l'image de référence. Cela impose donc un traitement complexe de l'image issue de la soustraction pour pouvoir détecter les éventuels défauts de fabrication. En outre, on a constaté que la fiabilité de ce contrôle restait faible, malgré ce traitement de l'image issue de la soustraction, ce qui impose de rejeter, par sécurité, un grand nombre de crayons comme étant non-conforme.

Un but de l'invention est de résoudre ce problème en fournissant un procédé plus fiable de contrôle non-destructif d'un élément pour réacteur nucléaire.

A cet effet, l'invention a pour objet un procédé défini dans la revendication 1.

Selon des modes particuliers de réalisation, le procédé peut comprendre l'une ou plusieurs des caractéristiques suivantes prise(s) isolément ou selon toutes les combinaisons techniquement possibles :

- l'élément est une partie d'un assemblage de combustible nucléaire,
- l'élément est un crayon de combustible nucléaire s'étendant le long d'un axe longitudinal et comprenant une gaine fermée par des bouchons inférieur et supérieur et contenant un combustible nucléaire,
- la zone comprend un cordon de soudure entre un des bouchons et la gaine,
- la zone comprend un point de soudure obturant un canal traversant un bouchon,
- l'étape b) comprend une sous-étape b1) d'ouverture ou de fermeture de l'image par adjonction d'un élément structurant,
- l'élément structurant a une forme allongée le long de l'axe longitudinal du crayon,
- l'élément structurant est un segment de p pixels, p étant un nombre entier non nul,
- un défaut à détecter est une porosité ou une sous-pénétration du cordon de soudure, et la sous-étape b1) est une sous-étape d'ouverture de l'image par adjonction de l'élément structurant,
- un défaut à détecter est une inclusion de tungstène, et la sous-étape b1) est une sous-étape de fermeture de l'image par adjonction de l'élément structurant,
- l'étape b) comprend, préalablement à la sous-étape b1), une sous-étape b0) de lissage de l'image par un convolueur,

- le convolueur est un carré de n pixels de côté, n étant un nombre entier non nul,
- le procédé comprend, après la sous-étape c1), une sous-étape c2) de multiplication de l'image par un coefficient correspondant sensiblement à l'intensité lumineuse maximale du dispositif de prise de vue utilisé pour acquérir l'image radiographique,
- le procédé comprend, après la sous-étape c1), une sous-étape de lissage de l'image grâce à un convolueur,
- le convolueur est un carré de q pixels de côté, q étant un nombre entier,
- le convolueur est allongé transversalement par rapport à l'axe longitudinal,
- le procédé comprend, après la sous-étape c1), une étape de binarisation de l'image,
- le défaut à détecter étant un défaut d'étanchéité au droit du point de soudure, l'étape b) comprend une sous-étape b1) de projection de l'image le long de l'axe longitudinal et de reconstruction de l'image à partir de sa projection le long de cet axe,
- l'étape b) comprend, préalablement à la sous-étape b1), une sous-étape b0) de lissage de l'image acquise par un convolueur,
- le convolueur est un carré de t pixels de côté, t étant un nombre entier,
- le procédé comprend, après la sous-étape c1), une sous-étape de binarisation de l'image,
- le procédé comprend une étape d) de détection automatique et de détermination de caractéristiques d'une région de l'image issue de l'étape c) correspondant à un défaut,
- une des caractéristiques est la position du défaut détecté dans l'image,
- une des caractéristiques est représentative de la dimension du défaut détecté,
- le procédé comprend une étape d) de détermination de l'épaisseur axiale minimale du point de soudure,
- les étapes a) à d) sont effectuées pour plusieurs angles de vue,
- le procédé comprend une étape e) de reconstruction des défauts détectés dans les images correspondant à différents angles de vues,
- l'étape e) comprend une sous-étape e1) de détermination des positions qu'un défaut détecté dans une première image correspondant à un premier angle de vue peut occuper dans une deuxième image correspondant à un deuxième angle de vue,
  une sous-étape e2) de comparaison des positions ainsi déterminées avec des positions de défaut(s) effectivement détecté(s) dans la deuxième image afin de déterminer si le défaut a été détecté dans la deuxième image, et, si le défaut a été détecté dans la deuxième image,
  une sous-étape e3) de calcul d'une dimension du défaut à partir des caractéristiques représentatives des dimensions du défaut déterminées dans la première et la deuxième images,
- le procédé comprend une étape e) de sommation des caractéristiques représentatives de la dimension déterminées pour plusieurs angles de vue et de comparaison de la somme avec une valeur seuil afin de rendre un verdict sur la conformité de l'élément avec des critères prédéterminés de fabrication,
- le procédé comprend une étape e) de calcul d'une moyenne des épaisseurs minimales déterminées pour plusieurs angles de vue et de comparaison avec une valeur seuil afin de rendre un verdict sur la conformité de l'élément avec des critères prédéterminés de fabrication.

L'invention sera mieux comprise à la lecture de la description qui va suivre, donnée uniquement à titre d'exemple, et faite en se référant aux dessins annexés, sur lesquels :

- la figure 1 est une vue schématique d'une installation de contrôle non-destructif pour la mise en oeuvre d'un procédé selon l'invention,
- la figure 2 est une vue partielle et en coupe longitudinale, illustrant l'extrémité supérieure d'un crayon de combustible nucléaire avant remplissage de la gaine par un gaz inerte,
- la figure 3 est une vue partielle, en coupe longitudinale et agrandie, illustrant l'extrémité supérieure du bouchon supérieur du crayon de la figure 2, après fermeture étanche du canal de remplissage,
- la figure 4 illustre une image acquise lors de la mise en oeuvre du procédé de contrôle non-destructif selon l'invention,
- la figure 5 est un diagramme en trois dimensions illustrant les niveaux de gris de la zone de l'image de la figure 4 correspondant au cordon de soudure circulaire,
- la figure 6 est une vue partielle agrandie de la figure 5 correspondant à une région présentant une porosité,
- la figure 7 est une vue analogue à la figure 6 après lissage,
- la figure 8 est une vue analogue à la figure 6 après érosion,
- la figure 9 est un diagramme illustrant l'effet d'une érosion sur une courbe,
- la figure 10 est une vue analogue à la figure 6 après dilatation,
- la figure 11 est une vue analogue à la figure 9 illustrant l'effet d'une dilatation,
- la figure 12 est une vue analogue à la figure 9 illustrant l'effet d'un « top-hat »,
- la figure 13 est une vue analogue à la figure 6 après soustraction logarithmique,

- la figure 14 est une vue analogue à la figure 6 après un nouveau lissage,
- la figure 15 représente l'image de la zone sélectionnée après ces différents traitements,
- la figure 16 est un organigramme illustrant des étapes mises en oeuvre pour la reconstruction des porosités détectées,
- la figure 17 est une vue illustrant l'affichage sur l'écran de l'ordinateur de l'installation après reconstruction des porosités,
- la figure 18 est une vue analogue à la figure 15, après la mise en oeuvre des différents traitements d'images en vue de détecter les sous-pénétrations dans le cordon de soudure circulaire,
- la figure 19 est un diagramme en trois dimensions illustrant les niveaux de gris de la zone de l'image de la figure 4 correspondant au point de soudure fermant le canal de remplissage du bouchon supérieur,
- la figure 20 est une figure analogue à la figure 19 après projection et reconstruction,
- la figure 21 est une vue analogue à la figure 19 après soustraction,
- la figure 22 représente l'image de la zone correspondant au point de soudure après la mise en oeuvre de ces différents traitements, et
- les figures 23 à 25 sont des vues illustrant l'affichage sur l'écran de l'ordinateur de l'installation de la figure 1 après la mise en oeuvre du procédé de contrôle non-destructif.

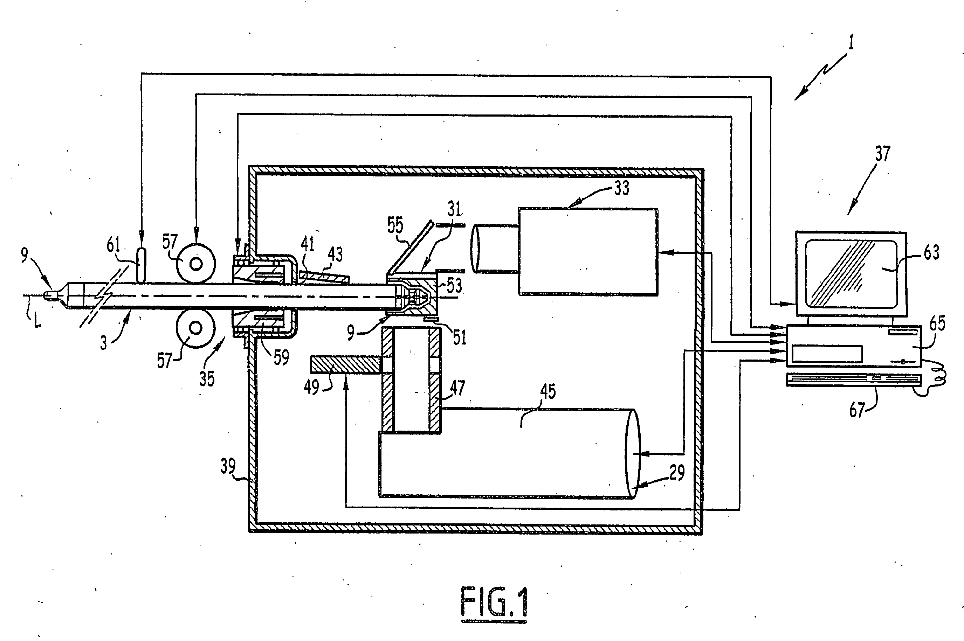

La figure 1 illustre schématiquement une installation de contrôle non-destructif de crayons de combustible nucléaire 3 pour réacteur à eau pressurisée.

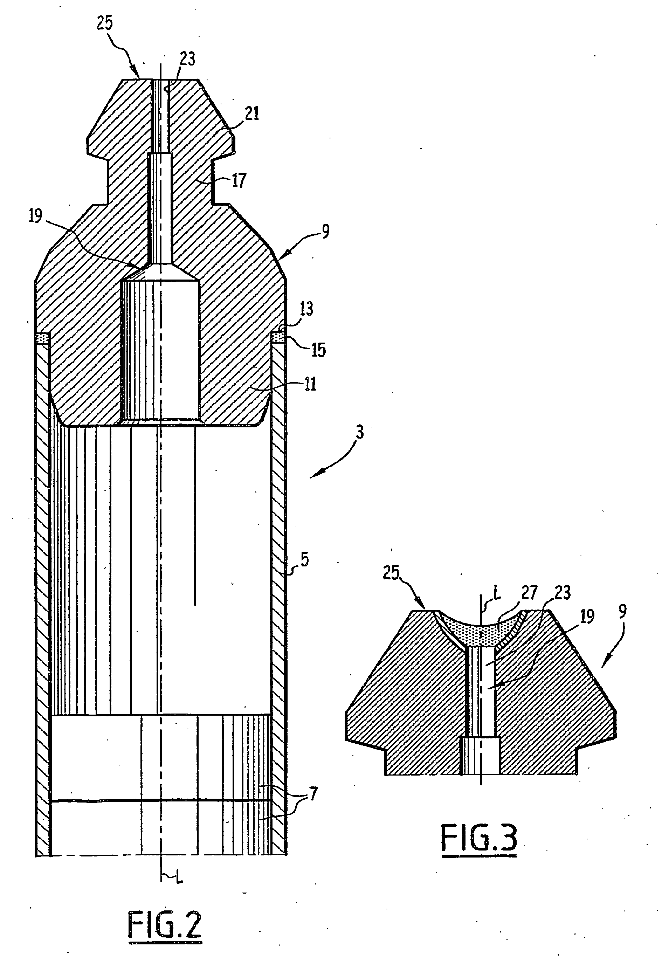

Comme illustré plus particulièrement par la figure 2, un tel crayon 3 s'étend le long d'une direction longitudinale L et comprend une gaine tubulaire 5 qui renferme un combustible nucléaire, par exemple sous forme de pastilles 7 empilées. La gaine 5 est fermée à ses extrémités par un bouchon 9 supérieur et un bouchon 9 inférieur, qui n'est pas visible sur la figure 2 mais est disposé à gauche sur la figure 1. La structure générale des bouchons 9 est analogue et seule celle du bouchon 9 supérieur sera décrite par la suite.

Le bouchon 9 supérieur comprend une partie inférieure 11 qui est engagée dans l'extrémité supérieure de la gaine 5, pratiquement sans jeu. Cette partie inférieure 11 est reliée par un épaulement 13 à la partie courante du bouchon 9. Un cordon de soudure circulaire 15 s'étend entre cet épaulement 13 et la tranche supérieure de la gaine 5.

Ce cordon 15 assure la fixation étanche du bouchon 9 supérieur à la gaine 5.

Le bouchon 9 comporte en outre une partie amincie 17 permettant l'engagement de mors de préhension.

En outre, et à la différence du bouchon 9 inférieur, le bouchon 9 supérieur comporte un canal 19 de remplissage de la gaine 5 par un gaz inerte sous pression. Ce canal est parfois dénommé canal de pressurisation.

Le canal 19 comporte plusieurs tronçons successifs dont les diamètres sont généralement décroissants depuis la partie 11 engagée dans la gaine 5 vers la partie d'extrémité extérieure 21 du bouchon 9.

A son extrémité supérieure ou extrémité externe, le canal 19 comporte un tronçon terminal 23 ou queusot. Ce tronçon 23 débouche dans la surface 25 d'extrémité supérieure du bouchon 9 via une ouverture d'entrée circulaire dont le centre se trouve sur l'axe longitudinal L.

Après avoir rempli la gaine 5 des pastilles 7, on vient la fermer par les bouchons 9 inférieur et supérieur que l'on soude à la gaine 5. On notera qu'un ressort (non-représenté) est alors classiquement interposé entre la pastille 7 supérieure et le bouchon 9 supérieur.

Ensuite, on remplit par l'intermédiaire du canal 19 la gaine 5 d'un gaz inerte sous pression, tel que de l'hélium, puis on assure la fermeture étanche du canal 19 dans son tronçon supérieur 23.

Comme illustré par la figure 3, cette fermeture étanche est obtenue grâce à un point de soudure 27 obtenu par fusion du matériau du bouchon 9 au voisinage du tronçon supérieur 23.

En revenant à la figure 1, l'installation 1 comprend principalement :

- une source 29 de rayons X,
- un dispositif 31 de conversion de rayons X en rayons lumineux,
- un dispositif 33 d'acquisition d'images numériques,
- des moyens 35 de déplacement d'un crayon de combustible 3, et
- un système informatique 37.

La source 29, le dispositif de conversion 31 et le dispositif d'acquisition 33 sont disposés à l'intérieur d'une enceinte 39 de protection biologique qui reçoit l'extrémité du crayon 3 à examiner au travers d'une ouverture 41 susceptible d'être fermée, en l'absence de crayon 3, par un clapet 43. Sur la figure 1 c'est l'extrémité supérieure du crayon 3 qui est introduite dans l'enceinte 39 et qui va donc être contrôlée.

La source 29 comprend un tube 45 de création de rayons X et un collimateur 47 pour orienter les rayons X radialement vers le bouchon 9 supérieur dont il faut contrôler l'étanchéité des soudures 15 et 27.

La source 29 comprend en outre un obturateur 49 qui peut être commandé, tout comme le tube 45, par le système informatique 37. La source 29 comprend également un indicateur de qualité de l'image (IQI) 51. Classiquement un tel indicateur comprend une plaque percée de deux trous calibrés. La comparaison des dimensions réelles de ces trous avec celles qu'ils ont sur l'image acquise permet de s'assurer de la qualité de l'image acquise.

Le bouchon 9 supérieur est engagé dans un bloc de compensation 53 qui a une forme sensiblement parallélépipédique et présente une cavité intérieure de forme sensiblement complémentaire de celle de l'extrémité supérieure du crayon 3 qu'elle reçoit. Ce bloc 53 est réalisé par exemple en alliage de zirconium.

Les rayons X issus du tube 45 traversent le bloc de compensation 53 et l'extrémité supérieure du crayon 3 radialement par rapport à sa direction longitudinale L.

Ensuite, les rayons X viennent frapper le dispositif 31 qui est par exemple un écran comprenant une pastille d'aluminium recouverte d'oxysulfure de gadolinium dopé au terbium. Les rayons X sont alors transformés en photons qui sont renvoyés, par l'intermédiaire d'un miroir 55, vers le dispositif 33 d'acquisition d'images.

Ce dispositif 33 est par exemple une caméra CCD.

La caméra 33 est reliée au système informatique 37 pour lui fournir les images numériques acquises et être pilotées par ce dernier.

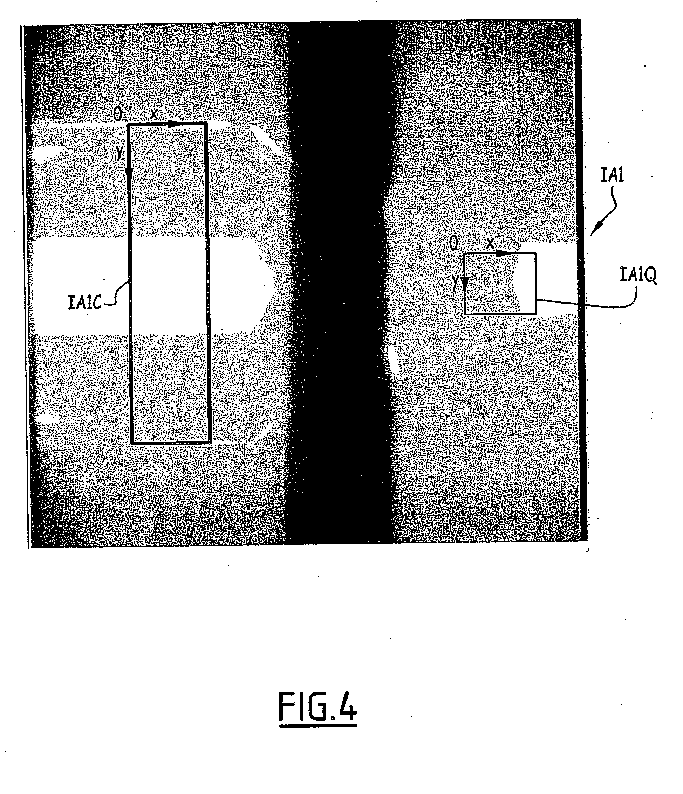

L'image ainsi acquise IA1 est représentée sur la figure 4. La lettre A signifie qu'il s'agit de l'image acquise et le chiffre 1, qu'il s'agit de la première prise de vue. La bande verticale sombre au centre correspond à un cache en plomb que l'on a placé dans le bloc de compensation 53 pour pallier la forte luminosité que devrait induire la partie amincie 17 du bouchon 9.

Les moyens 35 de déplacement comprennent notamment des galets motorisés 57 pour déplacer longitudinalement le crayon 3 et une pince tournante 59 permettant de le faire tourner autour de son axe L, afin d'acquérir des images selon différents angles de vue.

Les galets motorisés 57, qui sont pilotés par le système informatique 37, permettent de faire pénétrer l'extrémité d'un crayon 3 à examiner dans l'enceinte 39, de l'engager dans le bloc de compensation 53 et de l'extraire de l'enceinte 39 après mise en oeuvre du procédé de contrôle décrit ultérieurement.

Les moyens 35 de déplacement comprennent en outre un capteur 61 de mesure de la rotation du crayon 3 raccordé au système informatique 37. Ce capteur 61 comprend par exemple une roue en appui sur le crayon 3 pour être entraînée en rotation par le crayon 3 lorsqu'il tourne.

Le système informatique 37 comprend un ordinateur comprenant lui-même un ou plusieurs processeurs, des moyens de stockage, des moyens d'entrée/sortie et éventuellement des moyens d'affichage. Dans l'exemple représenté, il s'agit d'un micro-ordinateur qui comprend notamment un écran 63, une unité centrale 65 et un clavier 67.

Un programme est stocké dans l'ordinateur 37 et permet, en association avec une librairie de traitement d'images la mise en oeuvre du procédé de contrôle non-destructif. De telles librairies de traitement d'images sont couramment disponibles dans le commerce.

Les étapes mises en oeuvre par le procédé de contrôle non-destructif sont les suivantes.

L'ordinateur 37 va tout d'abord détecter et analyser les éventuelles porosités présentes dans le cordon de soudure circulaire 15. De telles porosités doivent se traduirent par une moindre absorption des rayons X et donc par des régions plus claires.

Pour cela, on sélectionne une zone IA1C de l'image acquise IA1 qui correspond à la zone du crayon 3 contenant le cordon de soudure 15, comme illustré par la figure 4. La lettre C signifie que cette zone est relative au cordon de soudure 15.

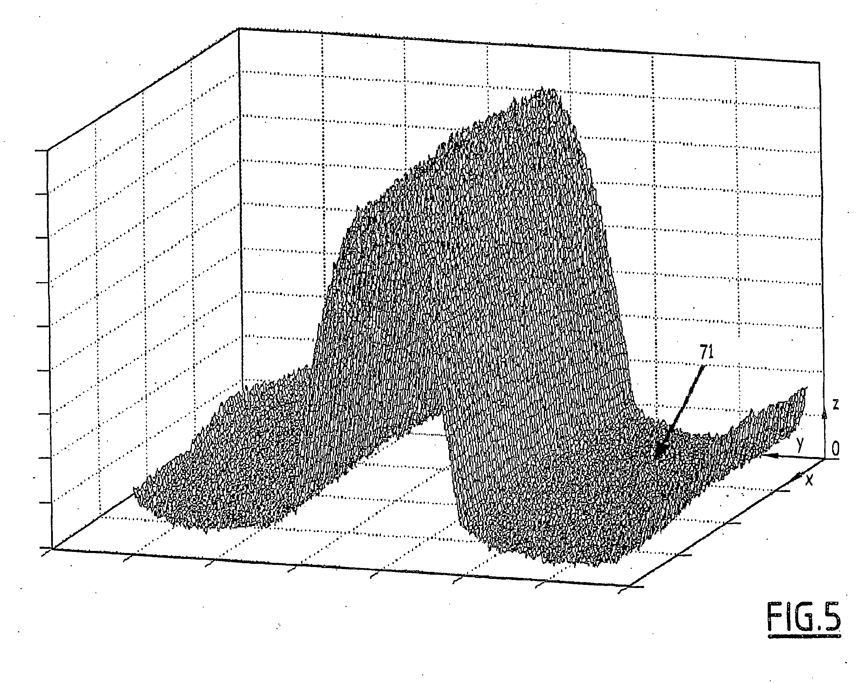

La figure 5 représente les différents niveaux de gris de la zone IA1C. Ces niveaux de gris ont été portés selon l'axe Oz du repère Oxyz représenté sur cette figure. On a également matérialisé les axes Ox et Oy sur la figure 4.

Comme cela apparaîtra ultérieurement, le cordon de soudure 15 présente une porosité 71 qui n'est pas décelable sur l'image acquise.

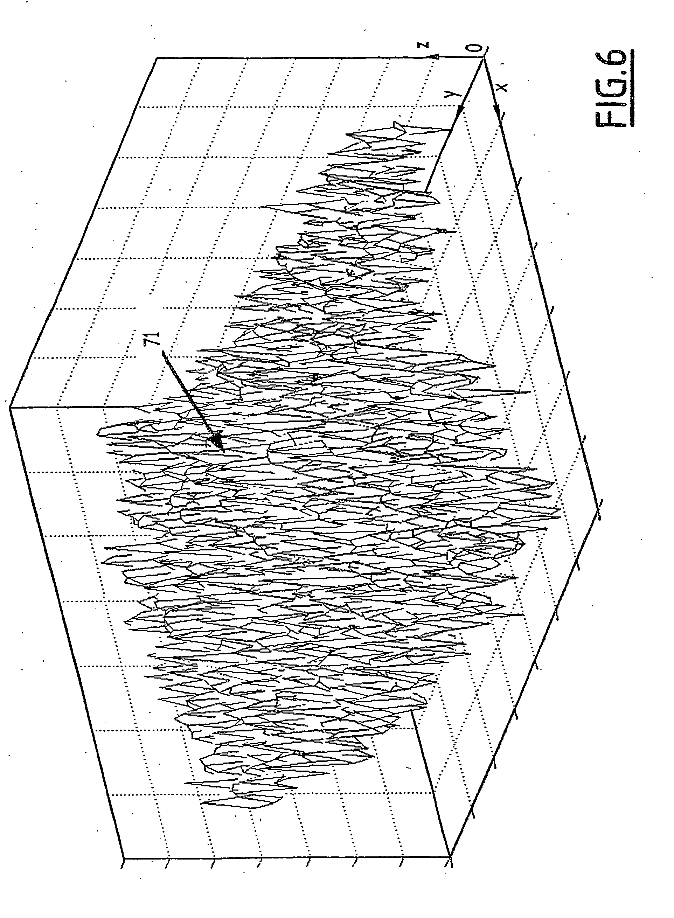

La figure 6 est une vue agrandie de la partie de la figure 5 où la porosité 71 est située.

Pour pouvoir détecter cette porosité 71, on va créer par traitement numérique de la zone IA1C, une image de référence IR1C correspondant à un cordon 15 qui ne comporterait pas de défaut.

Pour cela, on va soumettre la zone IA1C à une opération de lissage par un convolueur g qui est un carré de n pixels de côté, n étant un nombre entier, de préférence compris entre 3 et 9.

Le convolueur g est centré sur son pixel central.

L'opération à laquelle la zone IA1C est soumise correspond donc à la formule suivante :

$$I \times g(x,y) = \sum_{v=-\infty}^{+\infty} \sum_{w=-\infty}^{+\infty} g(v,w) \times I(x-v, y-w)$$

Dans cette formule et celles qui suivent, I désigne l'image en cours de traitement.

Cette opération va donc remplacer chaque pixel par la moyenne des pixels environnants contenus dans le convolueur centré sur le pixel considéré. Par exemple avec un convolueur g de 5 pixels de côté, chaque pixel serait remplacé par la moyenne du pixel considéré et des 24 pixels environnants. La zone IA1C issue de l'étape de lissage est notée IL1C.

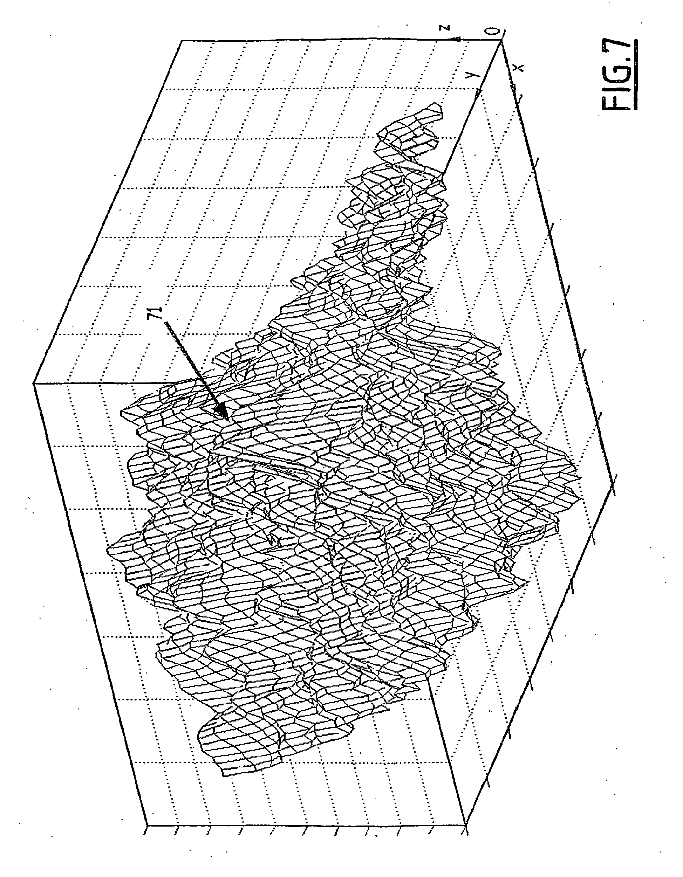

La figure 7 est une vue analogue à la figure 6 à l'issue de l'étape de lissage.

Ensuite, on va soumettre la zone IL1C lissée à une ouverture par adjonction d'un élément structurant h qui est un segment, parallèle à l'axe Ox, et centré sur son pixel central. Ce segment a une longueur de p pixels, p étant un nombre entier, de préférence compris entre 5 et 21.

L'ouverture par adjonction est une érosion par un élément structurant suivi d'une dilatation adjointe, c'est à dire d'une dilatation par le même élément structurant.

L'ouverture par adjonction de l'élément structurant h peut donc être définie par la formule :

$$(I \ominus h) \oplus h$$

L'érosion correspond à la première partie de cette formule et consiste à passer l'élément structurant h sur la zone IL1C, comme un convolueur, et à affecter la valeur minimum au pixel central.

Ainsi, l'érosion correspond à la formule :

$$(I \ominus h)(x) = \text{Min}(I(v))$$

$$v \in h(x)$$

Plus de détails sur les opérations de morphologie mathématique telles que les ouvertures, les « top-hat », ainsi que sur les opérations de traitement d'images telles que les lissages... peuvent être trouvés dans l'ouvrage de J. SERRA:

« Image Analysis and mathematical Morphology » Ac. Press, Tome 1 (1982), Tome 2 (1988).

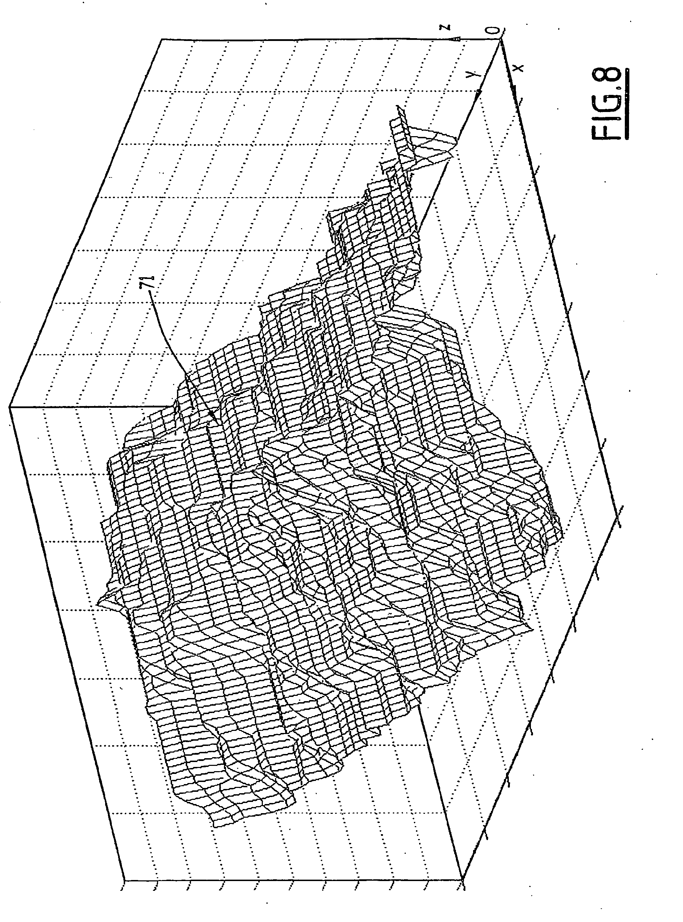

La figure 8 correspond à la figure 6 après cette opération d'érosion. La zone traitée est alors dénommée IE1C.

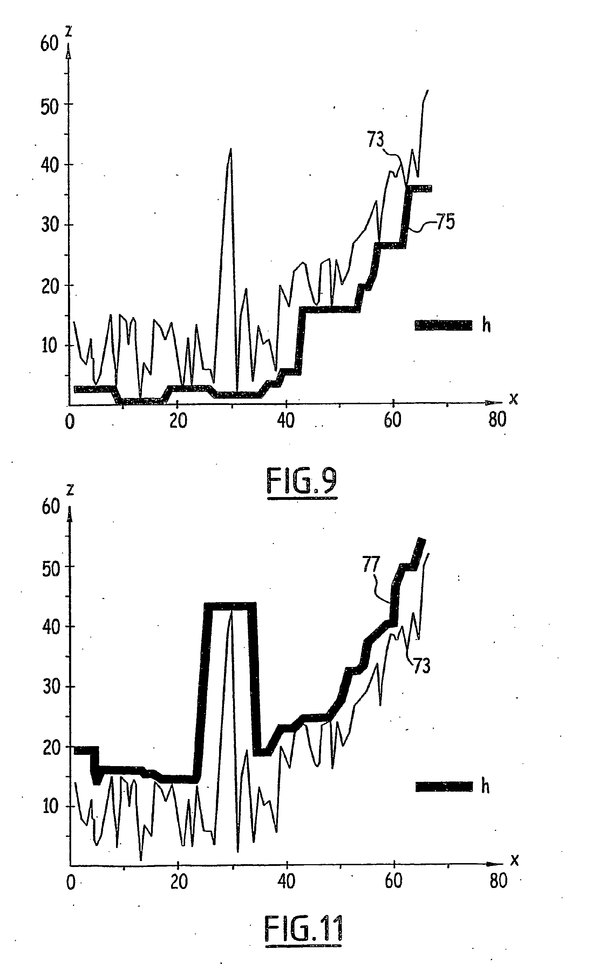

La figure 9 illustre schématiquement et de manière générale l'effet d'une telle érosion produite sur les variations des niveaux de gris d'une image le long de l'axe Ox.

La courbe 73 correspond à une image avant érosion et la courbe 75 à une image après érosion.

L'érosion garde donc le fond de l'image en éliminant les pics de niveau de gris dont la largeur est inférieure à celle de l'élément structurant.

La dilatation, qui est la seconde partie de l'opération d'ouverture, a pour but de ramener les niveaux de gris de l'image où ils se trouvaient avant l'érosion.

La dilatation consiste à passer l'élément structurant h sur l'image, comme un convolueur, et à affecter la valeur maximum au pixel central, conformément à la formule :

$$(I \oplus h)(x) = \text{Max}(I(v))$$

$$v \in g(x)$$

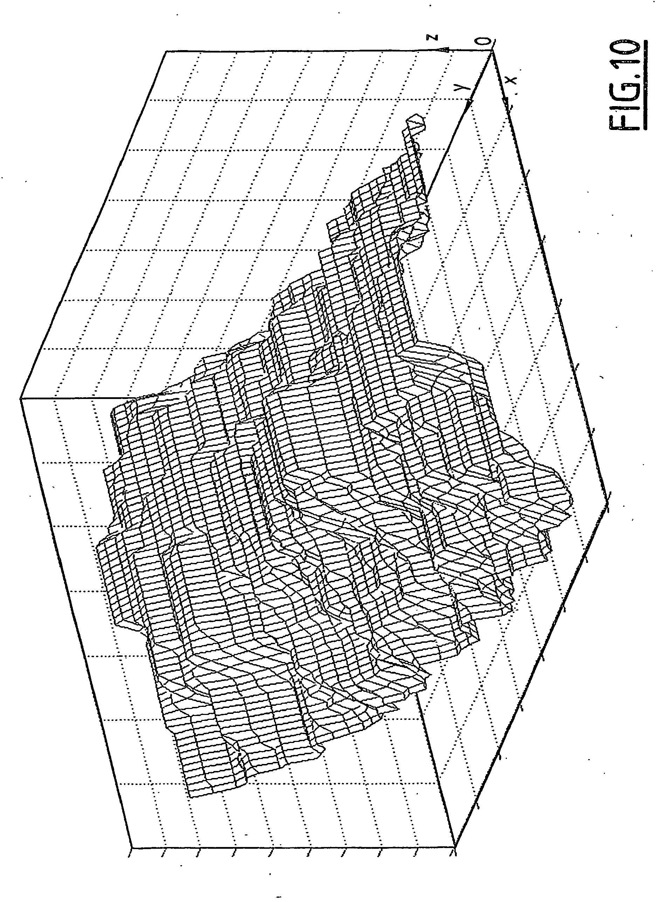

Comme illustré par la figure 10, les niveaux de gris de l'image reviennent à ceux de l'image lissée, mais la porosité 71 a disparu.

Sur la figure 11, la courbe 77 correspond à une image après dilatation.

L'image obtenue à l'issue de cette opération d'ouverture par adjonction constitue donc une image de référence IR1C puisque les défauts éventuels en ont été gommés.

On notera que la position et les dimensions des différentes parties du crayon 3 sur cette image correspondent à celles de la zone IA1C de l'image acquise puisqu'elle a été obtenue par traitement numérique de cette dernière.

Ensuite, pour détecter et analyser les défauts éventuels, on va comparer l'image lissée IL1 C à l'image de référence IR1 C.

Pour cela, on va effectuer l'opération suivante :

$$\frac{ILR1C - IR1C}{IR1C} \times K$$

Cela signifie que l'on va soustraire au niveau de gris de chaque pixel de l'image IL1C, le niveau de gris du pixel correspondant de l'image de référence IR1C, puis diviser par le niveau de gris du pixel de l'image de référence IR1C, et enfin multiplier par le coefficient K et réaffecter le résultat ainsi obtenu au pixel considéré.

La première partie de cette formule correspond à une soustraction dite « logarithmique ». En effet, l'image de référence IR1C n'est pas seulement soustraite à l'image lissée IL1C, mais cette différence est en outre divisée par un des termes de la soustraction.

On pourra trouver plus de renseignements sur les soustractions logarithmiques dans la publication :

« A model for logarithmic image processing » by Michel Jourlin and Jean-Charles Pinoli - Journal of Microscopy, Vol. 149, Pt 1, January 1988, pp.21-35 (The Royal Microscopical Society).

Une telle soustraction logarithmique permet de prendre en compte l'absorption des rayons X par la matière.

En effet, un défaut vu au travers de peu de matière aurait tendance à apparaître plus gros que ce même défaut vu au travers de plus de matière. Cette soustraction dite « logarithmique » permet donc de compenser cet effet.

Le coefficient multiplicateur K est un paramètre représentatif de la caméra 33 et peut correspondre sensiblement à la dynamique ou résolution de l'image acquise par la caméra 33, c'est à dire à la valeur maximale de l'intensité lumineuse.

Cette multiplication par le coefficient K permet de ramener les niveaux de gris à ceux de l'image IA1C.

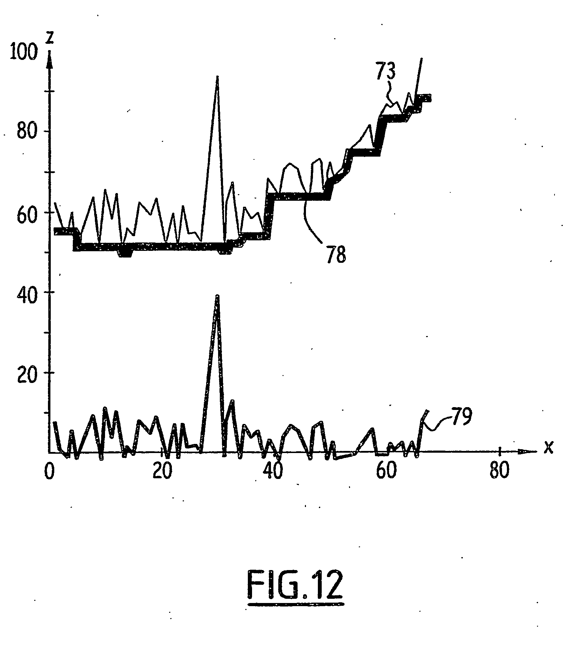

La combinaison des opérations d'ouverture par adjonction de l'élément structurant h puis de soustraction peut être en fait apparentée à un « top-hat » ou « chapeau haut de forme », bien que dans de tels « top hat » la soustraction ne soit pas « logarithmique ». Sur la figure 12 qui illustre de manière générale l'effet d'un tel « top-hat », la courbe 78 correspond à la courbe 73 après ouverture et la courbe 79 correspond à la soustraction de la courbe 78 à la courbe originale 73.

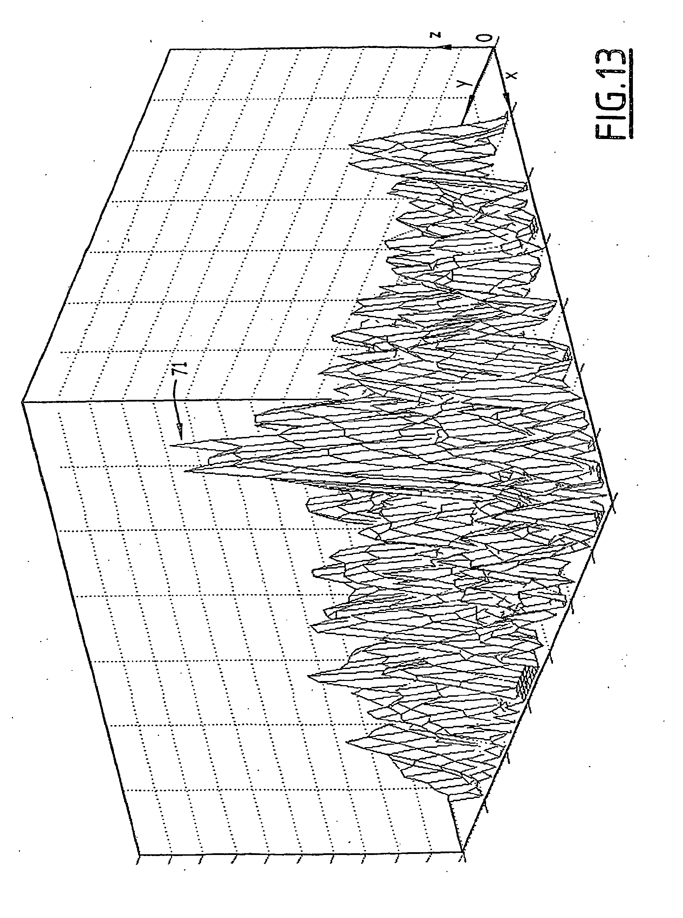

La figure 13 correspond à la figure 6 à l'issue du traitement de « top-hat » appliqué par l'ordinateur 37. L'image est alors dénommée IS1C.

L'opération de « top-hat » a donc fait ressortir la porosité 71.

Ensuite, on va soumettre l'image IS1C à une opération de moyennage, c'est à dire à un lissage, grâce à un convolueur j qui est également un carré, mais de dimensions plus importantes que le convolueur g. Ainsi, ce carré a par exemple un carré de q pixels de côté, q étant un nombre entier, de préférence compris entre 5 et 21.

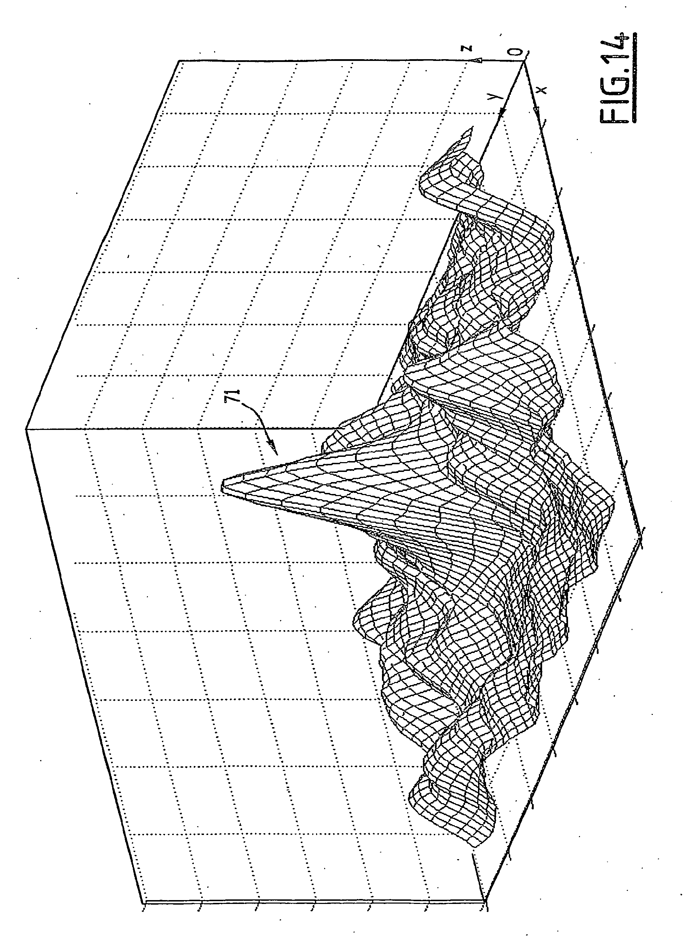

Comme on le voit sur la figure 14 illustrant l'image à l'issue de cette seconde étape de lissage, la porosité 71 devient plus compacte et les parasites sont atténués.

L'image obtenue est alors dénommée IM1CP. La lettre P précise que cette image est dédiée à la recherche de porosités. L'image IM1CP va alors être soumise à une étape de binarisation.

Une telle étape consiste à afficher en blanc les pixels de l'image dont le niveau de gris est au-dessus d'un seuil de binarisation déterminé, et afficher en noir ceux dont le niveau de gris est en dessous de ce seuil. Le seuil de binarisation, qui peut être modifié, correspond à la sensibilité souhaitée de l'analyse.

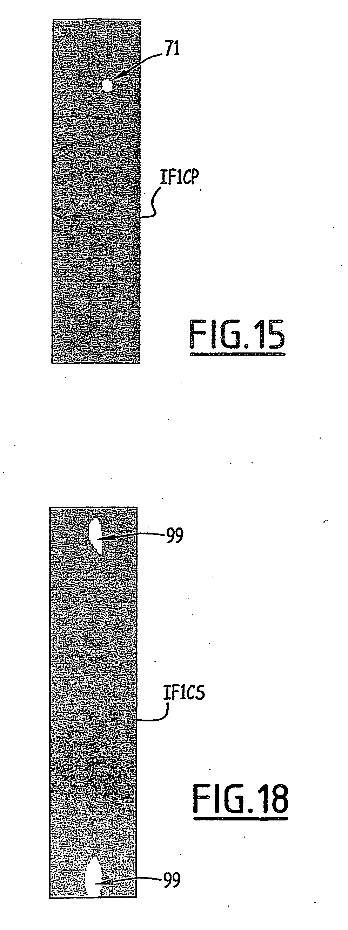

L'image finale à l'issue de ces traitements apparaît donc comme illustré par la figure 15 et est désignée IF1CP. La porosité 71 y apparaît sous forme d'une tâche blanche ou singularité.

Ensuite, l'ordinateur 37 va détecter et analyser les défauts dans l'image finale IF1 CP.

Pour cela, l'ordinateur 37 utilise l'outil de recherche de singularités ou « blobs » de la librairie de traitement d'images qui en outre détermine des caractéristiques des singularités de l'image IF1CP, c'est à dire des porosités ainsi détectées.

En particulier, l'ordinateur 37 calcule la position des porosités et leur diamètre.

Ensuite, l'ordinateur 37 commande la rotation du crayon 3 d'un angle de 120°, acquiert une image IA2 puis procède à l'ensemble des opérations précédemment décrites sur sa zone IA2C, ce qui permet d'obtenir une deuxième vue IF2CP de la porosité 71. Ici, le chiffre 2 signifie qu'il s'agit des images relatives à la deuxième vue.

Enfin, l'ordinateur 37 provoque à nouveau une rotation de 120° du crayon 3 autour de son axe longitudinal L et acquiert une image IA3 dans cette nouvelle position dont il traite la zone IA3C de la manière indiquée précédemment.

Ensuite, l'ordinateur 37 procède à une reconstruction du ou des défauts détectés, en l'occurrence, la porosité 71.

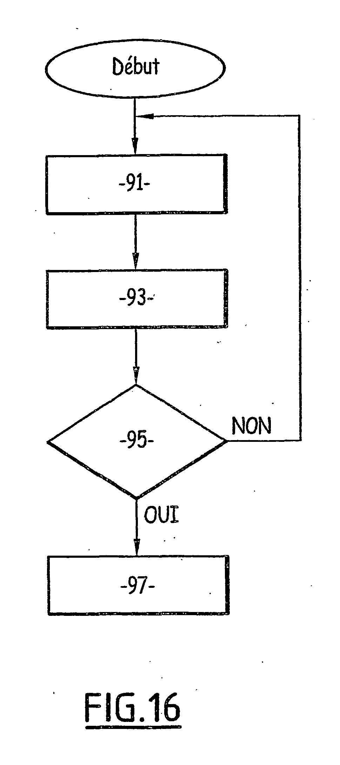

Les opérations alors mises en oeuvre par l'ordinateur 37 sont illustrées par l'organigramme de la figure 16.

Dans une première étape 91, l'ordinateur 37 sélectionne une porosité détectée dans la vue IF1 CP.

L'ordinateur 37 calcule ensuite, à partir des coordonnées de la porosité dans la vue IF1CP, les coordonnées qu'elle pourrait occuper dans les vues IF2CP et IF3CP. C'est l'objet de l'étape 93.

Ensuite, dans l'étape 95, l'ordinateur 37 vérifie si ces coordonnées calculées correspondent à celles d'une porosité effectivement détectée dans les vues IF2CP et IF3CP. Si ce n'est pas le cas, la porosité détectée seulement dans la vue IF1CP est ignorée et l'étape 91 est effectuée avec une autre porosité de la vue IF1 CP.

Si le résultat de l'étape de comparaison 95 est positif, la porosité a alors été détectée dans au moins deux vues et l'ordinateur 37 peut déterminer dans l'étape 97 ses coordonnées exactes et évaluer son diamètre réel.

Si la porosité n'a été détectée que dans deux vues, le diamètre réel est calculé à partir, par exemple, d'une formule du type $Am^2 + Bm + c$ où m est la moyenne des diamètres déterminés dans les deux vues dans laquelle la porosité a été détectée.

Si la porosité a été détectée dans trois vues, le diamètre réel est calculé à partir d'une formule du type $A'm + B'$ où m est le diamètre moyen des diamètres déterminés dans les trois vues IF1CP, IF2CP et IF3CP.

Ainsi, l'ordinateur 37 connaît les positions exactes des porosités détectées et a déterminé leurs diamètres réels.

Il est alors en mesure de représenter en coupe transversale ces porosités.

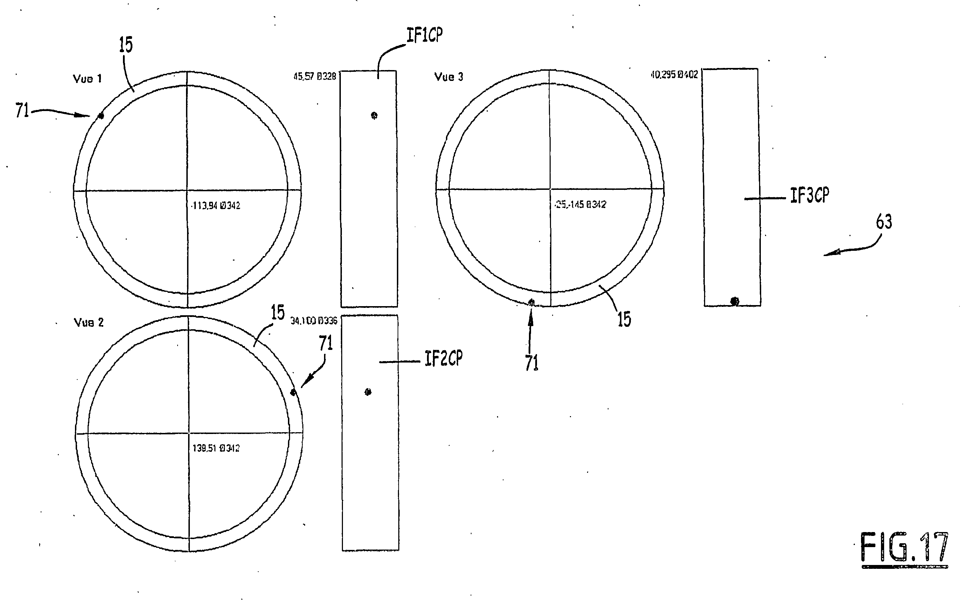

Cela est illustré par la figure 17 qui représente l'affichage sur l'écran 63 du cordon de soudure 15 en coupes transversales et où la seule porosité 71 détectée est affichée. Chacune des coupes transversales correspond à un angle de prise de vue.

L'ordinateur 37 peut enfin comparer les diamètres des porosités détectées à une valeur maximale autorisée, ainsi que comparer la somme de ces diamètres à une valeur seuil. Si les valeurs mesurées et la somme sont inférieures à la valeur maximale et à la valeur seuil, le crayon 3 est déclaré conforme pour ce qui concerne les porosités du cordon de soudure 15.

L'installation 1 décrite ci-dessus permet ensuite de détecter et d'analyser la présence de sous-pénétration(s) dans le cordon de soudure 15.

On rappelle qu'une telle sous-pénétration correspond à une épaisseur radiale locale insuffisante du cordon 15 de sorte que l'étanchéité entre le bouchon 9 considéré et la gaine 5 peut être compromise.

Une telle sous-pénétration, qui correspond à une absence de matière, apparaît sous forme d'une tâche plus claire sur les radiographies.

Pour détecter de telles sous-pénétrations, l'ordinateur 37 traite les images IA1C, IA2C et IA3C.

Les opérations de traitements sont les mêmes que celles décrites ci-dessus pour ce qui concerne la recherche des porosités, sauf que la seconde étape de lissage ou étape de moyennage est effectuée avec un convolueur k, qui est d'une part de dimensions plus importantes que dans le cas de la recherche des porosités et qui, d'autre part, est allongé le long de la direction Oy, c'est-à-dire transversalement à l'axe longitudinal L.

Il peut ainsi s'agir d'un rectangle centré sur son pixel central. Ce rectangle peut avoir par exemple r pixels de côté selon la direction Ox, r étant un nombre entier compris entre 5 et 15, et s pixels de côté selon la direction Oy, s étant un nombre entier par exemple compris entre 10 et 20.

L'utilisation d'un convolueur k allongé le long de la direction Oy permet de faire ressortir les défauts ayant une telle forme, ce qui est le cas des sous-pénétrations qui ont une certaine étendue angulaire, mais pas le cas des porosités qui s'apparentent à des bulles.

De même, le seuil de binarisation, c'est-à-dire le seuil de niveau de gris à partir duquel les pixels sont affichés en blanc, est plus élevé que pour la recherche des porosités.

Les images finales obtenues à l'issue de ces traitements sont référencées IF1CS, IF2CS, IF3CS. La figure 18 illustre l'image IF1CS. Cette image est issue d'une succession d'images correspondant à chacune des étapes du traitement, à savoir les images IA1C, IL1C, IE1C, ID1C, IS1C, IM1CS et IFCS.

La lettre S indique que ces images sont utilisées pour la recherche des sous-pénétrations.

On peut également déterminer grâce à la librairie de traitement d'images et afficher les coordonnées et les surfaces des singularités 99 mises en évidence, en l'occurrence les sous-pénétrations. Ces sous-pénétrations 99 sont au nombre de deux sur l'image IF1CS.

Ces mêmes étapes sont mises en oeuvre à partir des images IF2CS et IF3CS.

Ensuite, l'ordinateur 37 peut calculer une note relative aux sous-pénétrations du cordon de soudure 15. Cette note peut être la somme de toutes les surfaces des sous-pénétrations 99 détectées, éventuellement pondérées.

La comparaison de cette note de sous-pénétration avec une note seuil permet de rendre un verdict sur la conformité du crayon 3 analysé pour ce qui concerne les sous-pénétrations du cordon de soudure 15.

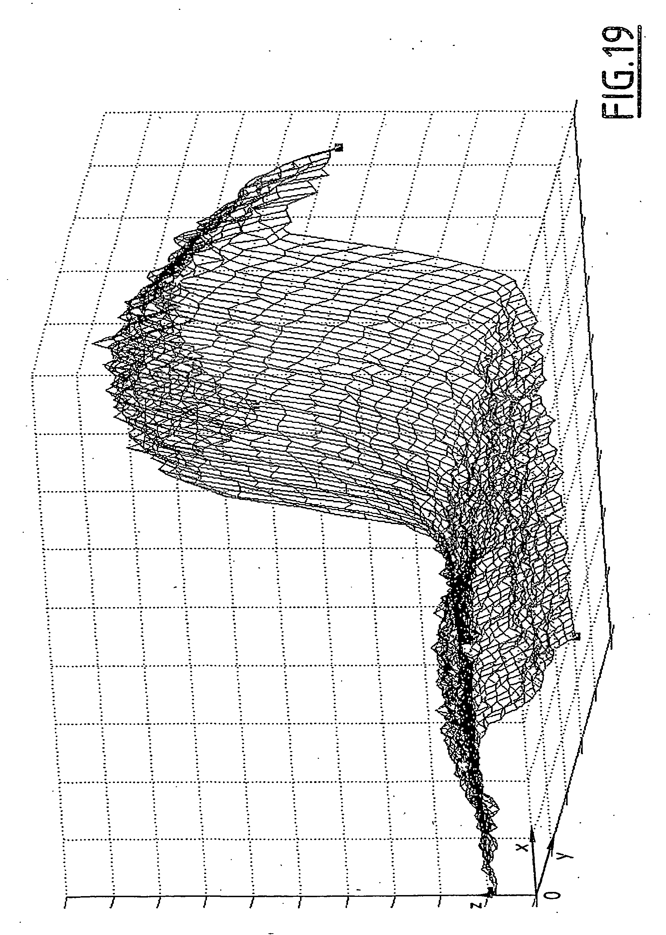

L'installation 1 permet ensuite de vérifier l'étanchéité au niveau du point de soudure 27 du canal de remplissage 19 de la gaine 5. Pour cela on sélectionne une zone IA1Q de l'image acquise IA1, comme illustré par la figure 4. La lettre Q signifie que cette zone est relative à la vérification de l'étanchéité au droit du queusot 23. La figure 19 illustre les niveaux de gris dans cette zone IA1Q.

Ensuite on soumet cette image IA1Q à une opération de lissage par un convolueur l qui est par exemple un carré de t pixels de côté centré sur son pixel central, t étant un nombre entier par exemple compris entre 3 et 9.

La taille de ce convolueur est réduite pour modifier le moins possible l'image IA1Q. L'image à l'issue de ce traitement est dénommée IL1Q.

Ensuite on soumet l'image IL1Q à une étape de projection selon l'axe Ox et de reconstruction.

Plus précisément, cette étape de projection et de reconstruction consiste à affecter au pixel de chaque colonne s'étendant le long de l'axe Oy, la valeur moyenne des niveaux de gris des pixels de cette colonne.

Ce traitement permet de privilégier le fond de l'image IL1Q est donc de gommer les éventuelles sous-pénétrations longitudinales locales du point de soudure.

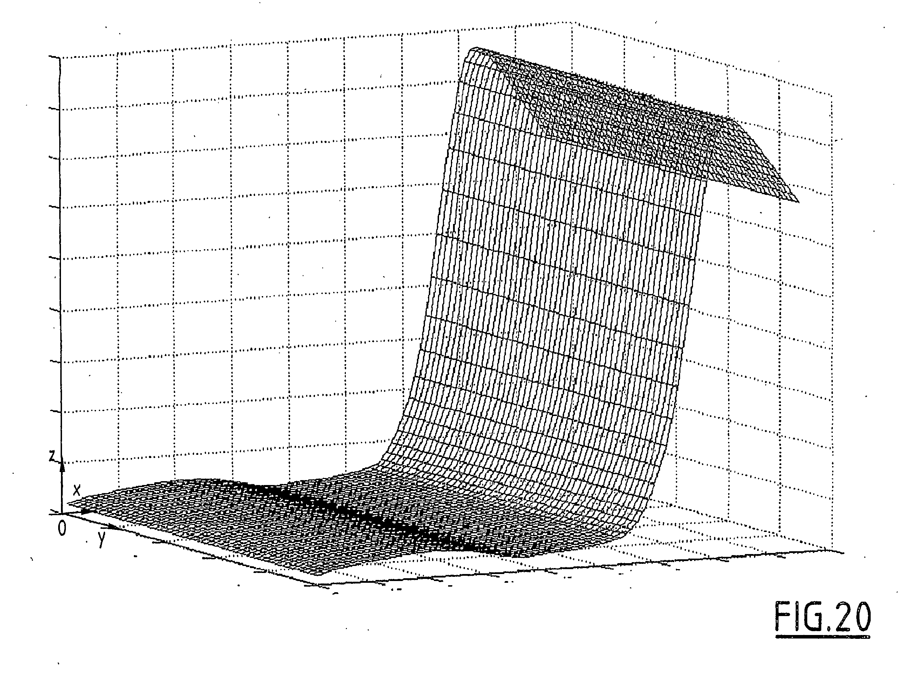

L'image ainsi obtenue est une image de référence IR1Q dont les niveaux de gris varient uniquement le long de la direction Ox, comme illustré par la figure 20.

Ensuite, on soustrait l'image de référence IR1Q à l'image lissée IL1Q. Il s'agit ici d'une soustraction simple IL1Q-IR1Q et non pas d'une soustraction logarithmique.

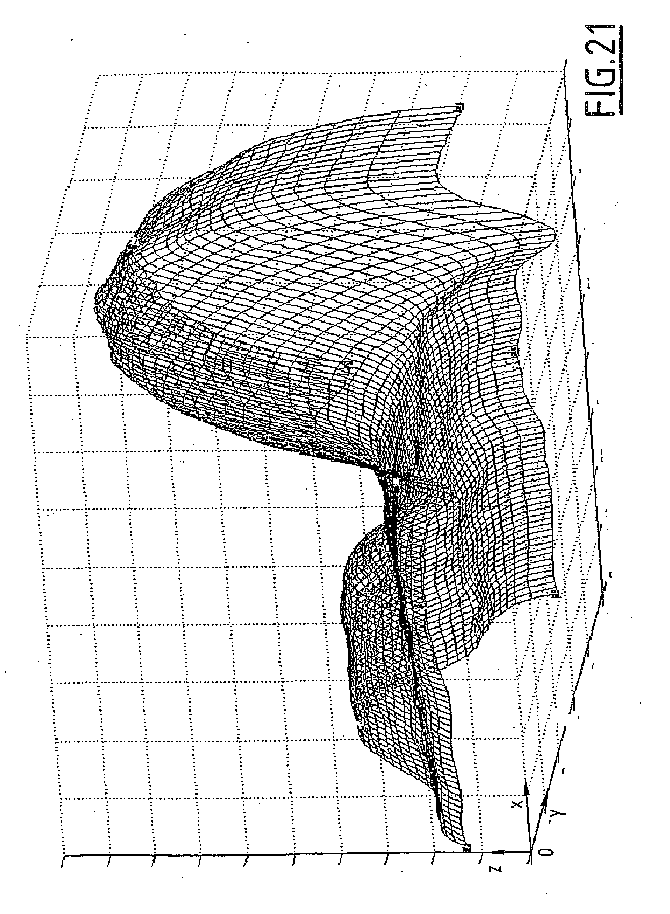

La figure 21 illustre les niveaux de gris à l'issue de cette opération.

Ensuite, on binarise l'image IS1Q issue de la soustraction afin d'obtenir une image finale IF1Q où tous les pixels ayant un niveau de gris inférieur à une valeur seuil se voient affecter la valeur zéro, et tous les autres se voient affecter la valeur maximale en niveau de gris.

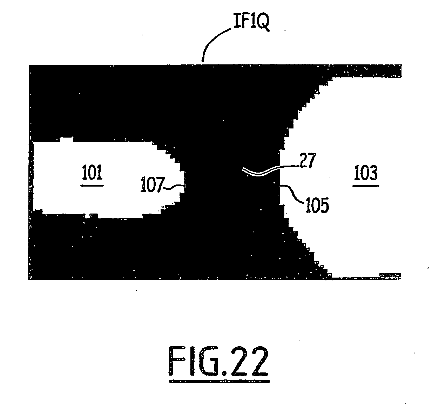

La figure 22 illustre l'image IF1Q. On peut y distinguer à gauche la région 101 du canal 19 sous le point de soudure 27 et à droite la cavité 103 formée au-dessus du point de soudure 27. On notera qu'en cas de soudure TIG, le point soudure 27 ne forme pas de cavité mais présente une surface extérieure convexe.

Ensuite, l'ordinateur 37 va détecter, grâce à l'outil de recherche de singularités de la librairie de traitement d'images, les zones 101 ou 103. Si, aucune zone ou une seule zone traversant horizontalement l'image IA1Q est détectée, le queusot 23 est déclaré non-soudé et le crayon 3 non-conforme. Ce dernier cas signifie en effet que les zones 101 ou 103 se rejoignent. Si deux zones 101 et 103 sont détectées, l'ordinateur 37 calcule, grâce à la librairie de traitement d'images, la distance entre ces deux zones 101 et 103 qui apparaissent en blanc sur l'image IF1C. Pour cela, la librairie trace par exemple le bord 105 de la cavité 103 sur l'image IF1C puis va construire le bord 107 de la zone 101.

Pour cela l'ordinateur 37 parcourt, pour chaque ligne, l'image IF1Q vers la droite en partant du bord gauche de l'image IF1Q jusqu'à trouver le bord 105. Ensuite, l'ordinateur 37 parcourt la ligne considérée en sens inverse jusqu'à détecter le premier pixel blanc. S'il détecte un tel pixel blanc, celui-ci est le point du bord 107 de la zone 101 pour la ligne considérée. S'il ne détecte pas de pixel blanc, ce qui correspond en fait au cas où seule une zone 103 est présente à droite de l'image IF1Q, l'ordinateur 37 considère que le bord 107 est le bord gauche de l'image IF1Q.

Ainsi, en procédant ligne par ligne, l'ordinateur 37 va déterminer les coordonnées des points des bords 105 et 107 des deux zones claires 101 et 103.

Ensuite, à partir de l'ensemble de ces coordonnées, l'ordinateur 37 va calculer la distance minimale entre ces bords 105 et 107, distance qui correspond à la pénétration axiale du point de soudure 27 dans le canal 19.

L'ordinateur 37 va ensuite procéder ainsi pour les vues IA2 et IA3 et fournir, à partir des zones IA2Q et IA3Q des images finales IF2Q et IF3Q, puis déterminer les pénétrations axiales du point de soudure 27 dans le canal 19 pour chacune de ces vues.

L'ordinateur 37 calcule enfin la pénétration axiale réelle du point de soudure 27 comme étant la moyenne des pénétrations axiales déterminées à partir des trois vues IF1Q, IF2Q et IF3Q. Il compare enfin cette valeur avec une valeur seuil, en-deçà de laquelle il considère que le point de soudure 27 ne pénètre pas suffisamment dans le canal 19 pour assurer l'étanchéité du crayon 3.

On notera également que les images IA1Q, IA2Q et IA3Q peuvent être soumises à un traitement pour la recherche de porosités, ce traitement étant analogue à celui décrit précédemment pour le cordon de soudure 15.

Enfin, l'installation 1 permet également, dans le cas où le cordon 15 et/ou le point 17 est/sont réalisé(s) par soudure TIG de déterminer la présence d'inclusion(s) de tungstène.

En effet, ces inclusions apparaissent sous forme de zones plus sombres sur les radiographies numériques acquises par la caméra 33. On peut alors, grâce à des traitements analogues à ceux décrits pour les porosités ou les sous-pénétrations, détecter et analyser de tels défauts et rendre un verdict à partir de critères de conformité prédéterminés.

On utilise alors à la place de l'opération d'ouverture par adjonction, une opération de fermeture par un élément structurant h. Cette opération est définie par la formule

$$(I \oplus h) \ominus h$$

Une telle fermeture permet d'éliminer les pics négatifs et ainsi de former des images de référence satisfaisantes.

L'élément structurant h est alors de préférence analogue à celui décrit précédemment.

On notera que les défauts recherchés apparaissant sous forme de pics négatifs dans les niveaux de gris, la binarisation est inversée par rapport à celle décrite précédemment. En variante, c'est l'opération de soustraction qui peut être inversée, c'est-à-dire que l'on soustrait l'image lissée à l'image érodée, le résultat étant divisé par l'image érodée et multipliée par le coefficient K.

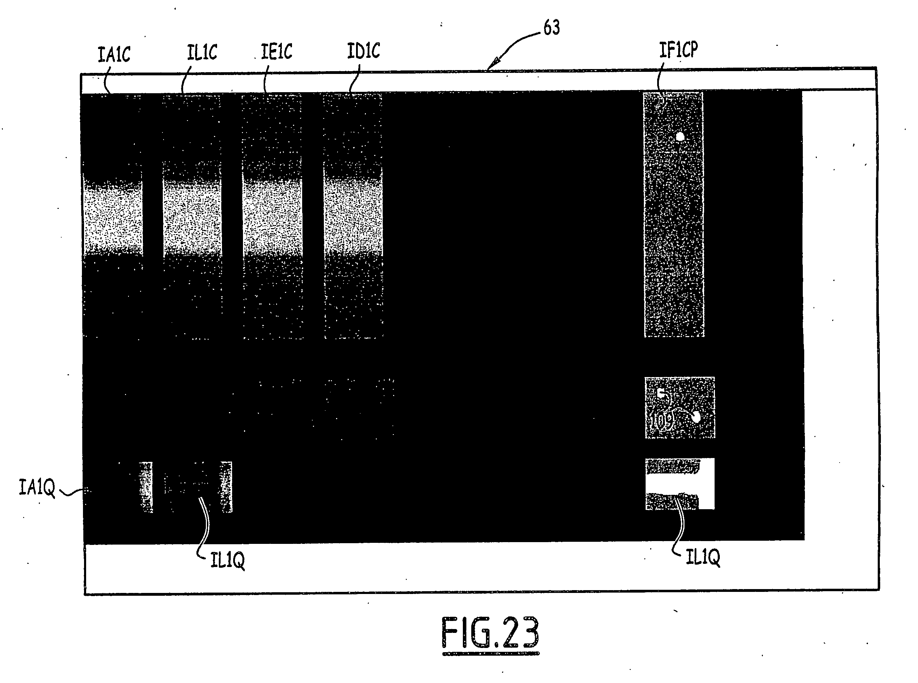

Il est alors possible de visualiser sur l'écran 63 l'ensemble des images acquises et traitées pour chaque angle de vue. La figure 23 illustre ainsi l'affichage de l'écran 63 pour le premier angle de vue.

La succession supérieure d'images correspond aux images relatives à la recherche de porosités à savoir IA1C, IL1C, IE1C, ID1C, IS1C, IM1CP et IF1CP. Les images IS1C et IM1CP sont bien présentes entre les images ID1C et IF1CP mais ne sont pas visibles du fait de leurs faibles niveaux de gris.

La succession intermédiaire d'images correspond à une zone de l'image IA1 dans lequel les orifices de l'indicateur de qualité de l'image (IQI) 51 sont visibles. Ces images ont été soumises exactement aux mêmes traitements que l'image IA1C, y compris les opérations de détermination des positions et des diamètres des singularités.

La succession inférieure d'images inférieures correspond à la succession d'images relatives au point de soudure 27, à savoir IA1Q, IL1Q, IR1Q, IS1Q et IF1Q. On notera que dans l'exemple de la figure 23, le queusot 23 n'est pas soudé.

La partie inférieure de l'écran 63 peut fournir des informations relatives à la position et au diamètre des porosités 71 détectées, à la position et au diamètre des taches 109 détectées dans la zone correspondant à l'indicateur de qualité d'image (IQI) 51 ainsi que des informations relatives à la pénétration axiale du point de soudure 27 pour l'angle de vue considéré.

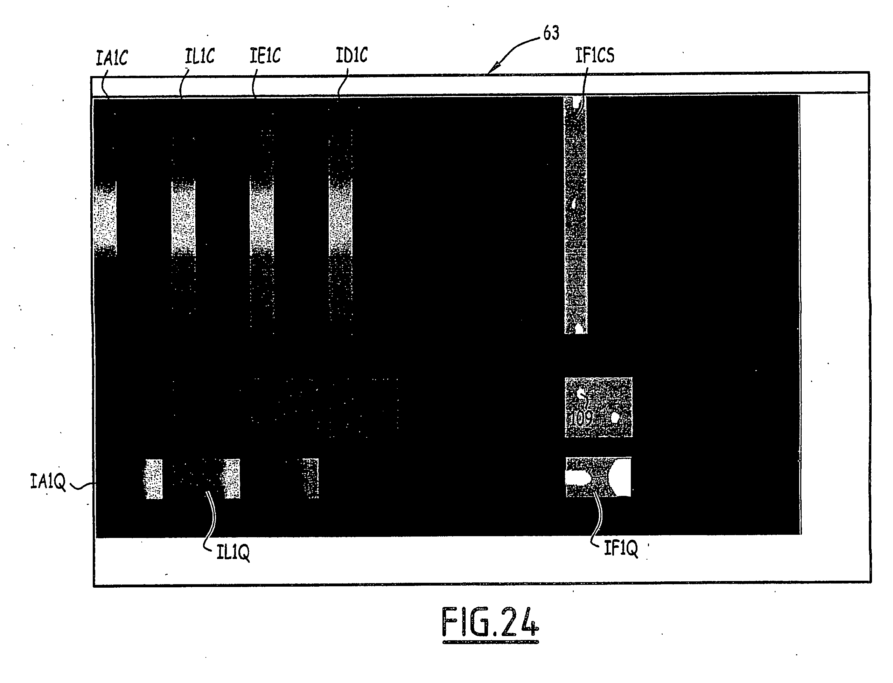

Les dimensions des taches détectées pour les images correspondant à l'IQI permettent de vérifier la fiabilité des mesures effectuées. L'écran 63 peut également afficher dans sa partie supérieure la succession d'images correspondant à la recherche de sous-pénétrations. Cela est illustré par la figure 24.

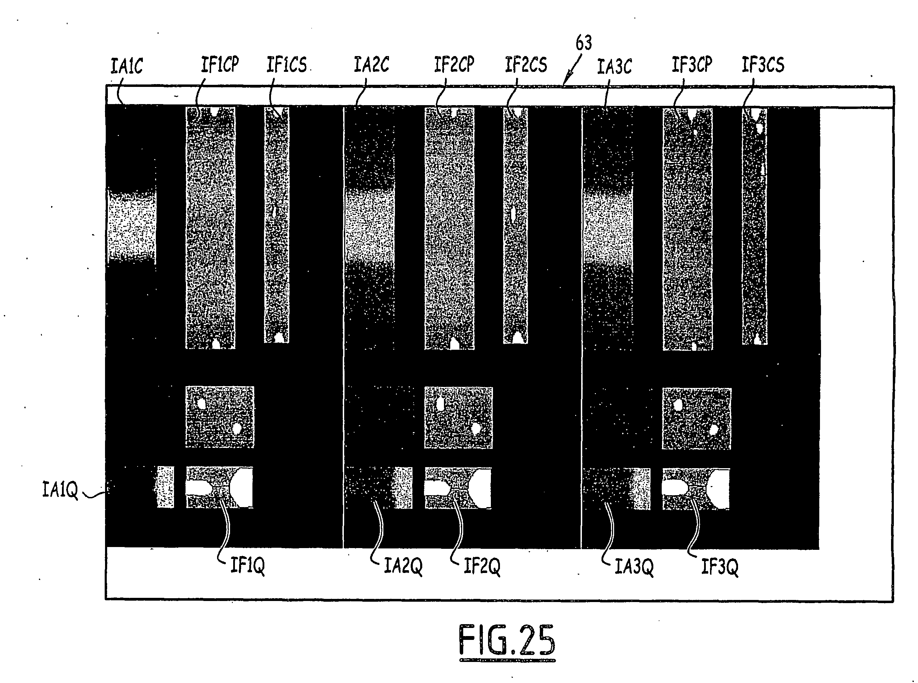

Enfin, et comme illustré par la figure 25, l'écran peut également afficher simultanément :

- dans une partie supérieure les images IA1C, IA2C, IA3C, IF1CP, IF2CP, IF3CP, IF1CS, IF2CS, IF3CS, relatives au contrôle du cordon 15,
- dans une région intermédiaire, les images initiales et finales pour les trois vues concernant l'indicateur de qualité IQI,
- dans une région inférieure, les images IA1Q, IA2Q, IA3Q, IF1Q, IF2Q et IF3Q, relatives au contrôle du point de soudure 27.

Ainsi, l'installation 1 a permis de déterminer automatiquement si le bouchon supérieur 9 du crayon 3 présentait des porosités ou des sous-pénétrations pour le cordon 15 ou un défaut d'étanchéité au droit du point de soudure 27, et éventuellement des inclusions de tungstène, justifiant le rejet du crayon 3. Ensuite, on procède de manière analogue pour le bouchon 9 inférieur.

On a pu constater que le procédé de contrôle non-destructif décrit est particulièrement fiable et d'exécution rapide, puisqu'il permet de rendre un verdict pour chaque bouchon 9 en moins de 26 secondes. Le nombre de crayons 3 indûment rejetés est également réduit.

En outre, le procédé décrit permet de détecter et caractériser les défauts séparément et d'en reconstruire certains, c'est à dire de déterminer leurs positions exactes et certaines de leurs caractéristiques.

Cette fiabilité et cette rapidité d'exécution est due à la réalisation des images de référence, notamment IR1C, IR2C, IR3C, IR1Q, IR2Q et IR3Q à partir des images acquises IA1C, IA2C, IA3C, IA1Q, IA2Q, et IA3Q.

En effet, cela permet de garantir une correspondance exacte entre les contours sur ces images, ce qui simplifie les traitements nécessaires pour isoler ensuite les défauts recherchés.

De manière plus générale, d'autres traitements numériques des images acquises peuvent être effectués pour former des images de référence. Pour le cordon de soudure 25, on utilisera de préférence une ouverture par adjonction qui, combinée avec l'opération suivante de soustraction, forme un « top-hat ».

L'utilisation d'un élément structurant h sous forme d'un segment parallèle à l'axe L s'avère particulièrement avantageuse. En effet, un tel élément structurant permet de limiter les aberrations introduites dans les images du fait de la présence du canal 19.

Plus généralement, l'élément structurant h peut ne pas être un segment mais avoir une forme allongée le long de l'axe longitudinal L. Il peut ainsi s'agir d'un rectangle.

De manière plus générale, les principes ci-dessus, à savoir la création d'une image de référence par traitement d'une image acquise de l'élément à contrôler, peuvent être mis en oeuvre pour contrôler d'autres éléments de réacteurs nucléaires que des crayons de combustible nucléaire, en particulier leurs soudures.

## Revendications

1. Procédé de contrôle non-destructif d'un élément (3) pour réacteur nucléaire, procédé comprenant les étapes de :

   a) acquisition d'une image radiographique et numérique (IA1C, IA2C, IA3C, IA1Q, IA2Q, IA3Q) d'au moins une zone (15, 27) de l'élément (3),
   b) création d'une image de référence (IR1C, IR2C, IR3C, IR1Q, IR2Q, IR3Q) par traitement numérique de l'image acquise, et

c) comparaison de l'image acquise (IA1C, IA2C, IA3C, IA1Q, IA2Q, IA3Q), éventuellement traitée, à l'image de référence pour détecter la présence de défaut(s),

le procédé étant **caractérisé en ce que** l'étape c) comprend une sous-étape c1) de calcul de la différence entre l'image acquise, éventuellement traitée, et l'image de référence, et de division de cette différence par l'image acquise, éventuellement traitée, ou par l'image de référence.

2. Procédé selon la revendication 1, **caractérisé en ce que** l'élément (3) est une partie d'un assemblage de combustible nucléaire.

3. Procédé selon la revendication 2, **caractérisé en ce que** l'élément est un crayon de combustible nucléaire (3) s'étendant le long d'un axe longitudinal (L) et comprenant une gaine (5) fermée par des bouchons (9) inférieur et supérieur et contenant un combustible nucléaire (7).

4. Procédé selon la revendication 3, **caractérisé en ce que** la zone comprend un cordon de soudure (15) entre un des bouchons (9) et la gaine (5).

5. Procédé selon la revendication 3, **caractérisé en ce que** la zone comprend un point de soudure (27) obturant un canal (19) traversant un bouchon

6. Procédé selon l'une des revendications précédentes, **caractérisé en ce que** l'étape b) comprend une sous-étape b1) d'ouverture ou de fermeture de l'image par adjonction d'un élément structurant (h).

7. Procédé selon les revendications 3, 4 et 6 prises ensembles, **caractérisé en ce que** l'élément structurant (h) a une forme allongée le long de l'axe longitudinal (L) du crayon (3).

8. Procédé selon la revendication 7, **caractérisé en ce que** l'élément structurant (h) est un segment de p pixels, p étant un nombre entier non nul.

9. Procédé selon la revendication 7 ou 8, **caractérisé en ce qu'**un défaut à détecter est une porosité (71) ou une sous-pénétration (99) du cordon de soudure (15), et **en ce que** la sous-étape b1) est une sous-étape d'ouverture de l'image par adjonction de l'élément structurant (h).

10. Procédé selon la revendication 7 ou 8, **caractérisé en ce qu'**un défaut à détecter est une inclusion de tungstène, et **en ce que** la sous-étape b1) est une sous-étape de fermeture de l'image par adjonction de l'élément structurant (h).

11. Procédé selon l'une quelconque des revendications 6 à 10, **caractérisé en ce que** l'étape b) comprend, préalablement à la sous-étape b1), une sous-étape b0) de lissage de l'image par un convolueur (g).

12. Procédé selon la revendication 11, **caractérisé en ce que** le convolueur (g) est un carré de n pixels de côté, n étant un nombre entier non nul.

13. Procédé selon la revendication 1, **caractérisé en ce qu'**il comprend, après la sous-étape c1), une sous-étape c2) de multiplication de l'image par un coefficient correspondant sensiblement à l'intensité lumineuse maximale du dispositif de prise de vue (33) utilisé pour acquérir l'image radiographique.

14. Procédé selon la revendication 1 ou 13, **caractérisé en ce qu'**il comprend, après la sous-étape c1), une sous-étape de lissage de l'image grâce à un convolueur (j, k).

15. Procédé selon la revendication 14, **caractérisé en ce que** le convolueur est un carré de q pixels de côté, q étant un nombre entier.

16. Procédé selon la revendication 14, **caractérisé en ce que** le convolueur (k) est allongé transversalement par rapport à l'axe longitudinal (L).

17. Procédé selon l'une des revendications 1 ou 13 à 16, **caractérisé en ce qu'**il comprend, après la sous-étape c1), une étape de binarisation de l'image.

18. Procédé selon la revendication 5, **caractérisé en ce que** le défaut à détecter étant un défaut d'étanchéité au droit du point de soudure (27), l'étape b) comprend une sous-étape b1) de projection de l'image le long de l'axe longitudinal (L) et de reconstruction de l'image à partir de sa projection le long de cet axe (L).

19. Procédé selon la revendication 18, **caractérisé en ce que** l'étape b) comprend, préalablement à la sous-étape b1), une sous-étape b0) de lissage de l'image acquise par un convolueur (l).

20. Procédé selon la revendication 19, **caractérisé en ce que** le convolueur (l) est un carré de t pixels de côté, t étant un nombre entier.

21. Procédé selon l'une des revendications 18 à 20, **caractérisé en ce qu'**il comprend, après la sous-étape c1), une sous-étape de binarisation de l'image.

22. Procédé selon l'une des revendications précédentes, **caractérisé en ce que** le procédé comprend une étape d) de détection automatique et de détermination de caractéristiques d'une région (71 ; 99) de l'image issue de l'étape c) correspondant à un défaut.

23. Procédé selon la revendication 22, **caractérisé en ce qu'**une des caractéristiques est la position du défaut détecté dans l'image.

24. Procédé selon la revendication 22 ou 23, **caractérisé en ce qu'**une des caractéristiques est représentative de la dimension du défaut détecté.

25. Procédé selon l'une des revendications 18 à 21, **caractérisé en ce qu'**il comprend une étape d) de détermination de l'épaisseur axiale minimale du point de soudure (27).

26. Procédé selon l'une des revendications 22 à 25, **caractérisé en ce que** les étapes a) à d) sont effectuées pour plusieurs angles de vue.

27. Procédé selon les revendications 23, 24 et 26 prises ensemble, **caractérisé en ce qu'**il comprend une étape e) de reconstruction des défauts détectés dans les images correspondant à différents angles de vues.

28. Procédé selon la revendication 27, **caractérisé en ce que** l'étape e) comprend une sous-étape e1) de détermination des positions qu'un défaut détecté dans une première image correspondant à un premier angle de vue peut occuper dans une deuxième image correspondant à un deuxième angle de vue, une sous-étape e2) de comparaison des positions ainsi déterminées avec des positions de défaut(s) effectivement détecté(s) dans la deuxième image afin de déterminer si le défaut a été détecté dans la deuxième image, et, si le défaut a été détecté dans la deuxième image, une sous-étape e3) de calcul d'une dimension du défaut à partir des caractéristiques représentatives des dimensions du défaut déterminées dans la première et la deuxième images.

29. Procédé selon les revendications 24 et 26 prises ensemble, **caractérisé en ce qu'**il comprend une étape e) de sommation des caractéristiques représentatives de la dimension déterminées pour plusieurs angles de vue et de comparaison de la somme avec une valeur seuil afin de rendre un verdict sur la conformité de l'élément (3) avec des critères prédéterminés de fabrication.

30. Procédé selon les revendications 25 et 26 prises ensembles, **caractérisé en ce qu'**il comprend une étape e) de calcul d'une moyenne des épaisseurs minimales déterminées pour plusieurs angles de vue et de comparaison avec une valeur seuil afin de rendre un verdict sur la conformité de l'élément (3) avec des critères prédéterminés de fabrication.

**Patentansprüche**

1. Verfahren zur zerstörungsfreien Überwachung eines Elements (3) für einen Kernreaktor, wobei das Verfahren die Schritte umfasst:

   a) Aufnehmen eines digitalen Röntgenbilds (IA1C, IA2C, IA3C, IA1Q, IA2Q, IA3Q) mindestens einer Zone (15, 27) des Elements (3),

b) Herstellen eines Referenzbilds (IR1C, IR2C, IR3C, IR1Q, IR2Q, IR3Q) durch digitale Bearbeitung des aufgenommenen Bilds, und

c) Vergleichen des gegebenenfalls bearbeiteten aufgenommenen Bilds (IA1C, IA2C, IA3C, IA1Q, IA2Q, IA3Q) mit dem Referenzbild, um das Vorhandensein eines Fehlers bzw. von Fehlern zu erfassen,

wobei das Verfahren **dadurch gekennzeichnet ist, dass** der Schritt c) einen Teilschritt c1) des Berechnens des Unterschieds zwischen dem gegebenenfalls bearbeiteten aufgenommenen Bild und dem Referenzbild, und des Teilens dieses Unterschieds durch das gegebenenfalls bearbeitete aufgenommene Bild oder das Referenzbild umfasst.

2. Verfahren nach Anspruch 1, **dadurch gekennzeichnet, dass** das Element (3) ein Teil eines Kernbrennstoffsystems ist.

3. Verfahren nach Anspruch 2, **dadurch gekennzeichnet, dass** das Element ein Kernbrennstab (3) ist, der sich entlang einer Längsachse (L) erstreckt, eine durch einen unteren und einen oberen Verschluss (9) verschlossene Hülle (5) umfasst, und einen Kernbrennstoff (7) enthält.

4. Verfahren nach Anspruch 3, **dadurch gekennzeichnet, dass** die Zone eine Schweißnaht (15) zwischen den Verschlüssen (9) und der Hülle (5) umfasst.

5. Verfahren nach Anspruch 3, **dadurch gekennzeichnet, dass** die Zone einen Schweißpunkt umfasst, der einen einen Verschluss (9) durchquerenden Kanal (19) dicht abschließt.

6. Verfahren nach einem der vorhergehenden Ansprüche, **dadurch gekennzeichnet, dass** der Schritt b) einen Teilschritt b1) des Öffnens oder Schließens des Bilds durch Hinzufügen eines strukturierenden Elements (h) umfasst.

7. Verfahren nach den zusammengefassten Ansprüchen 3, 4 und 6, **dadurch gekennzeichnet, dass** das strukturierende Element (h) eine entlang der Längsachse (L) des Stabs (3) ausgedehnte Form hat.

8. Verfahren nach Anspruch 7, **dadurch gekennzeichnet, dass** das strukturierende Element (h) ein Segment aus p Pixeln ist, wobei p eine nicht Null betragende, ganze Zahl ist.

9. Verfahren nach Anspruch 7 oder 8, **dadurch gekennzeichnet, dass** ein zu erfassender Fehler eine Porosität (71) oder eine Schwachstelle (99) der Schweißnaht (15) ist, und dass der Teilschritt b1) ein Teilschritt des Öffnens des Bilds durch Hinzufügen des strukturierenden Elements (h) ist.

10. Verfahren nach Anspruch 7 oder 8, **dadurch gekennzeichnet, dass** ein zu erfassender Fehler ein Wolframeinschluss ist, und dass der Teilschritt b1) ein Teilschritt des Schließens des Bilds durch Hinzufügen des strukturierenden Elements (h) ist.

11. Verfahren nach einem der Ansprüche 6 bis 10, **dadurch gekennzeichnet, dass** der Schritt b) vor dem Teilschritt b1) einen Teilschritt b0) der Glättung des Bilds durch einen Konvolutor (g) umfasst.

12. Verfahren nach Anspruch 11, **dadurch gekennzeichnet, dass** der Konvolutor (g) ein Quadrat mit einer Seitenlänge von n Pixeln ist, wobei n eine nicht Null betragende, ganze Zahl ist.

13. Verfahren nach Anspruch 1, **dadurch gekennzeichnet, dass** es nach dem Teilschritt c1) einen Teilschritt c2) der Multiplikation des Bilds mit einem Faktor umfasst, der im Wesentlichen der maximalen Lichtstärke der Aufnahmevorrichtung (33) entspricht, die zum Aufnehmen des Röntgenbilds verwendet wurde.

14. Verfahren nach Anspruch 1 oder 13, **dadurch gekennzeichnet, dass** es nach dem Teilschritt c1) einen Teilschritt der Glättung des Bilds mittels eines Konvolutors (j, k) umfasst.

15. Verfahren nach Anspruch 14, **dadurch gekennzeichnet, dass** der Konvolutor ein Quadrat mit einer Seitenlänge von q Pixeln ist, wobei q eine ganze Zahl ist.

16. Verfahren nach Anspruch 14, **dadurch gekennzeichnet, dass** der Konvolutor (k) in Bezug auf die Längsachse (L) quer ausgedehnt ist.

17. Verfahren nach einem der Ansprüche 1 oder 13 bis 16, **dadurch gekennzeichnet, dass** es nach dem Teilschritt c1) einen Schritt der Digitalisierung des Bilds umfasst.

18. Verfahren nach Anspruch 5, **dadurch gekennzeichnet, dass**, wenn der zu erfassende Fehler ein Dichtigkeitsfehler an der Stelle des Schweißpunkts (27) ist, der Schritt b) einen Teilschritt b1) der Projizierung des Bilds entlang der Längsachse (L) und der Rekonstruktion des Bilds aus seiner Projektion entlang dieser Achse (L) umfasst.

19. Verfahren nach Anspruch 18, **dadurch gekennzeichnet, dass** der Schritt b) vor dem Teilschritt b1) einen Teilschritt b0) der Glättung des aufgenommenen Bild durch einen Konvolutor (I) umfasst.

20. Verfahren nach Anspruch 19, **dadurch gekennzeichnet, dass** der Konvolutor (I) ein Quadrat mit einer Seitenlänge von t Pixeln ist, wobei t eine ganze Zahl ist.

21. Verfahren nach einem der Ansprüche 18 bis 20, **dadurch gekennzeichnet, dass** es nach dem Teilschritt c1) einen Teilschritt der Digitalisierung des Bilds umfasst.

22. Verfahren nach einem der vorhergehenden Ansprüche, **dadurch gekennzeichnet, dass** das Verfahren einen Schritt d) des automatischen Erfassens und des Bestimmens von Charakteristika eines einem Fehler entsprechenden Bereichs (71; 99) des aus dem Schritt c) hervorgegangenen Bilds umfasst.

23. Verfahren nach Anspruch 22, **dadurch gekennzeichnet, dass** eines der Charakteristika die Position des im Bild erfassten Fehlers ist.

24. Verfahren nach Anspruch 22 oder 23, **dadurch gekennzeichnet, dass** eines der Charakteristika repräsentativ für das Ausmaß des erfassten Fehlers ist.

25. Verfahren nach einem der Ansprüche 18 bis 21, **dadurch gekennzeichnet, dass** es einen Schritt d) der Bestimmung der axialen Mindestdicke des Schweißpunkts (27) umfasst.

26. Verfahren nach einem der Ansprüche 22 bis 25, **dadurch gekennzeichnet, dass** die Schritte a) bis d) für mehrere Blickwinkel durchgeführt werden.

27. Verfahren nach den zusammengefassten Ansprüchen 23, 24 und 26, **dadurch gekennzeichnet, dass** es einen Schritt e) der Rekonstruktion der in den Bildern erfassten Fehler entsprechend verschiedenen Blickwinkeln umfasst.

28. Verfahren nach Anspruch 27, **dadurch gekennzeichnet, dass** der Schritt e) einen Teilschritt e1) der Bestimmung der Positionen, die ein in einem ersten Bild erfasster Fehler entsprechend einem ersten Blickwinkel in einem zweiten Bild entsprechend einem zweiten Blickwinkel einnehmen kann,
einen Teilschritt e2) des Vergleichs der so bestimmten Positionen mit Positionen eines/von tatsächlich im zweiten Bild erfassten Fehlers/Fehlern, um zu bestimmen, ob der Fehler im zweiten Bild erfasst wurde, und, wenn der Fehler im zweiten Bild erfasst wurde,
einen Teilschritt e3) der Berechnung eines Ausmaßes des Fehlers ausgehend von Charakteristika, die repräsentativ für Ausmaße des Fehlers sind, die im ersten und zweiten Bild bestimmt wurden, umfasst.

29. Verfahren nach den zusammengefassten Ansprüchen 24 und 26, **dadurch gekennzeichnet, dass** es einen Schritt e) der Summierung der für das Ausmaß repräsentativen Charakteristika, die für mehrere Blickwinkel bestimmt wurden, und des Vergleichs der Summe mit einem Schwellenwert umfasst, um ein Urteil über die Konformität des Elements (3) mit vorbestimmten Herstellungskriterien zu fällen.

30. Verfahren nach den zusammengefassten Ansprüchen 25 und 26, **dadurch gekennzeichnet, dass** es einen Schritt e) der Berechnung eines Mittelwerts der für mehrere Blickwinkel bestimmten Mindestdicken und des Vergleichs mit einem Schwellenwert umfasst, um ein Urteil über die Konformität des Elements (3) mit vorbestimmten Herstellungskriterien zu fällen.

**Claims**

1.  Method for the non-destructive testing of an element (3) for a nuclear reactor, a method comprising the steps of:

    a) acquisition of a digital radiographic image (IA1C, IA2C, IA3C, IA1Q, IA2Q, IA3Q) of at least one area (15, 27) of the element (3),
    b) creation of a reference image (IR1C, IR2C, IR3C, IRIQ, IR2Q, IR3Q), by digital processing of the acquired image, and
    c) comparison of the acquired image (IA1C, IA2C, IA3C, IA1Q, IA2Q, IA3Q), optionally processed, with the reference image in order to detect the presence of any defect or defects,

    the method being **characterised in that** step c) comprises a sub-step c1) of computing the difference between the acquired image, optionally processed, and the reference image, and dividing this difference by the acquired image, optionally processed, or by the reference image.

2.  Method according to claim 1, **characterised in that** the element (3) is a part of a nuclear fuel assembly.

3.  Method according to claim 2, **characterised in that** the element is a nuclear fuel rod (3) extending along a longitudinal axis (L) and comprising a sheath (5) closed by bottom and top plugs (9) and containing a nuclear fuel (7).

4.  Method according to claim 3, **characterised in that** the area comprises a weld bead (15) between one of the plugs (9) and the sheath (5).

5.  Method according to claim 3, **characterised in that** the area comprises a weld spot (27) closing off a channel (19) passing through a plug (9).

6.  Method according to one of the preceding claims, **characterised in that** step b) comprises a sub-step b1) of opening or closing the image by adding a structuring element (h).

7.  Method according to claims 3, 4 and 6 taken together, **characterised in that** the structuring element (h) has a form elongated along the longitudinal axis (L) of the rod (3).

8.  Method according to claim 7, **characterised in that** the structuring element (h) is a segment of p pixels, p being a non-zero integer number.

9.  Method according to claim 7 or 8, **characterised in that** a fault to be detected is a porosity (71) or an under-penetration (99) of the weld bead (15), and **in that** the sub-step b1) is a sub-step of opening of the image by addition of the structuring element (h).

10. Method according to claim 7 or 8 **characterised in that** a defect to be detected is an inclusion of tungsten and **in that** the sub-step b1) is a sub-step of closure of the image by addition of the structuring element (h).

11. Method according to any one of claims 6 to 10, **characterised in that** step b) comprises, prior to sub-step b1), a sub-step b0) of smoothing of the image by a convolutor (g).

12. Method according to claim 11, **characterised in that** the convolutor (g) is a square with sides of n pixels, n being a non-zero integer number.

13. Method according to claim 1, **characterised in that** it comprises, after sub-step c1), a sub-step c2) of multiplication of the image by a coefficient corresponding substantially to the maximum light intensity of the filming device (33) used for acquiring the radiographic image.

14. Method according to claim 1 or 13, **characterised in that** it comprises, after the sub-step c1), a sub-step of smoothing the image by means of a convolutor (j, k).

15. Method according to claim 14, **characterised in that** the convolutor is a square with sides of q pixels, q being an integer number.

16. Method according to claim 14, **characterised in that** the convolutor (k) is elongated transversely with respect to the longitudinal axis (L).

17. Method according to one of claims 1 or 13 to 16, **characterised in that** it comprises, after the sub-step c1), a step of binarisation of the image.

18. Method according to claim 5, **characterised in that**, the defect to be detected being a defect in airtightness at the weld spot (27), the step b) comprises a sub-step b1) of projection of the image along the longitudinal axis (L) and reconstruction of the image from its projection along this axis (L).

19. Method according to claim 18, **characterised in that** the step b) comprises, prior to the sub-step b1), a sub-step b0) of smoothing of the acquired image by a Konvolutor (I).

20. Method according to claim 19, **characterised in that** the convolutor (I) is a square with sides of t pixels, t being an integer number.

21. Method according to one of claims 18 to 20, **characterised in that** it comprises, after the sub-step c1) a sub-step of binarisation of the image.

22. Method according to one of the preceding claims, **characterised in that** the method comprises a step d) of automatic detection and determination of characteristics of a region (71; 99) of the image issuing from step c) corresponding to a defect.

23. Method according to claim 22, **characterised in that** one of the characteristics is the position of the defect detected in the image.

24. Method according to claim 22 or 23, **characterised in that** one of the characteristics represents the dimension of the defect detected.

25. Method according to one of claims 18 to 21, **characterised in that** it comprises a step d) of determining the minimum axial thickness of the weld spot (27).

26. Method according to one of claims 22 to 25, **characterised in that** the steps a) to d) are performed for several viewing angles.

27. Method according to claims 23, 24 and 26 taken together, **characterised in that** it comprises a step e) of reconstruction of the defects detected in the images corresponding to different viewing angles.

28. Method according to claim 27, **characterised in that** the step e) comprises a sub-step e1) of determination of the positions that a defect detected in a first image corresponding to a first viewing angle can occupy in a second image corresponding to a second viewing angle,
a sub-step e2) of comparison of the positions thus determined with positions of a defect or defects actually detected in the second image in order to determine whether the defect has been detected in the second image and, if the defect has been detected in the second image,
a sub-step e3) of calculating a dimension of the defect from the characteristics representing the dimensions of the defect determined in the first and second images.

29. Method according to claims 24 and 26 taken together, **characterised in that** it comprises a step e) of summation of the characteristics representing the dimension determined for several viewing angles and comparison of the sum with a threshold value in order to give a verdict on the conformity of the element (3) with predetermined manufacturing criteria.

30. Method according to claims 25 and 26 taken together, **characterised in that** it comprises a step e) of calculating a mean of the minimum thicknesses determined for several viewing angles and comparison with a threshold value in order to give a verdict on the conformity of the element (3) with predetermined manufacturing criteria.

FIG.1

FIG.2

FIG.3

FIG.4

EP 1 702 340 B1

71

z

y

0

x

FIG.5

EP 1 702 340 B1

FIG.6

FIG.7

EP 1 702 340 B1

FIG.8

FIG.9

FIG.11

FIG.10

FIG.12

FIG.13

EP 1 702 340 B1

FIG.14

EP 1 702 340 B1

71

IF1CP

FIG.15

99

IF1CS

FIG.18

99

```
        ┌─────────────┐
        │    Début    │
        └─────────────┘
               │
               ↓
        ┌─────────────┐
        │    -91-     │
        └─────────────┘
               │
               ↓
        ┌─────────────┐
        │    -93-     │
        └─────────────┘
               │
               ↓
             ◇  -95-  ◇──── NON
               │
              OUI
               │
               ↓
        ┌─────────────┐
        │    -97-     │
        └─────────────┘
```

## FIG.16

FIG.17

EP 1 702 340 B1

FIG.19

FIG.20

FIG.21

FIG.22

FIG.23

EP 1 702 340 B1

FIG.24

EP 1 702 340 B1

FIG.25

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Image Analysis and mathematical Morphology. Ac. Press, 1982, vol. 1
- IMAGE ANALYSIS AND MATHEMATICAL MORPHOLOGY. 1988, vol. 2
- A model for logarithmic image processing. **MICHEL JOURLIN ; JEAN-CHARLES PINOLI.** Journal of Microscopy. The Royal Microscopical Society, Janvier 1988, vol. 149, 21-35